(19) Europäisches Patentamt
European Patent Office
Office européen des brevets

(11) EP 4 787 791 A1

(12) **EUROPEAN PATENT APPLICATION**
published in accordance with Art. 153(4) EPC

(43) Date of publication:
**05.08.2026 Bulletin 2026/32**

(21) Application number: **24881451.9**

(22) Date of filing: **12.10.2024**

(51) International Patent Classification (IPC):
**H04L 27/26** (2006.01)

(52) Cooperative Patent Classification (CPC):
**H04L 25/03; H04L 27/26**

(86) International application number:
**PCT/CN2024/124571**

(87) International publication number:
**WO 2025/087085 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.10.2023 CN 202311423753**

(71) Applicant: **HUAWEI TECHNOLOGIES CO., LTD.
Shenzhen 518129 (CN)**

(72) Inventors:
• **WEN, Shan
Shenzhen, Guangdong 518129 (CN)**
• **HUANG, Huang
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) This application provides a communication method and apparatus, to flexibly configure a guard interval between symbols. The method includes: A first communication apparatus obtains K data symbols, where K is a positive integer; based on first configuration information, the first communication apparatus adds a first sequence, a second sequence, and a third sequence to P data symbols to obtain a first set, or adds a first sequence and a second sequence to P data symbols to obtain a first set, or adds a second sequence and a third sequence to P data symbols to obtain a first set, where P is less than or equal to K; and the first communication apparatus modulates the first set to obtain a first waveform symbol. The first configuration information is determined based on a length of a first SCP included in the first waveform symbol and a length of a cyclic prefix CP in the first waveform symbol. Therefore, a sequence included in the first set is related to the length of the first SCP and the length of the CP in the first waveform symbol, so that flexibility of a guard interval between the first waveform symbol generated based on the first set and another symbol can be improved.

FIG. 8

**Description**

<u>CROSS-REFERENCE TO RELATED APPLICATIONS</u>

This application claims priority to Chinese Patent Application No. 202311423753.9, filed with the China National Intellectual Property Administration on October 28, 2023 and entitled "COMMUNICATION METHOD AND APPARATUS", which is incorporated herein by reference in its entirety.

<u>TECHNICAL FIELD</u>

This application relates to the field of mobile communication technologies, and in particular, to a communication method and apparatus.

<u>BACKGROUND</u>

In a wireless communication system, a medium through which a signal is transmitted from a transmitter to a receiver is referred to as a channel. Multipath means a propagation phenomenon in which a radio signal arrives at the receiver through two or more paths. Causes of multipath may include atmospheric duct, ionospheric reflection and refraction, or reflection from water and land objects (such as mountains and buildings). Because a plurality of components of the signal in multipath propagate different distances, the plurality of components arrive at the receiver at different time. Different components correspond to different paths. A time difference between arrival of a first path component and arrival of a last component of a same signal is referred to as a maximum delay spread (delay spread, DS).

Multipath signal propagation causes inter-symbol interference (inter-symbol interference, ISI) and inter-carrier interference (inter-carrier interference, ICI), which deteriorates communication performance. To eliminate ISI and ICI between symbols, a guard interval (guard interval, GI) is usually inserted between the symbols. However, how to flexibly configure a guard interval between symbols still needs to be further studied.

<u>SUMMARY</u>

This application provides a communication method and apparatus, to flexibly configure a guard interval between symbols.

According to a first aspect, a communication method is provided. The method may be implemented by a first communication apparatus. The first communication apparatus may be configured to send a signal. For example, the first communication apparatus may be a terminal device or an access network device (or replaced with a network device like a base station). Alternatively, the first communication apparatus may be a component in a terminal device or a component in an access network device. The component in this application may include, for example, at least one of a chip, a chip system, a processor, a transceiver, a processing unit, or a transceiver unit. For example, the communication method is performed by the first communication apparatus. The communication method provided in this application may include the following steps.

The first communication apparatus obtains K data symbols. Based on first configuration information, the first communication apparatus adds a first sequence, a second sequence, and a third sequence to P data symbols to obtain a first set, or adds a first sequence and a second sequence to P data symbols to obtain a first set, or adds a second sequence and a third sequence to P data symbols to obtain a first set, where the K data symbols include the P data symbols, K is a positive integer greater than 1, and P is a positive integer less than or equal to K. The first configuration information is determined based on a length of a first supplementary CP (supplementary CP, SCP) included in the first waveform symbol and a length of a cyclic prefix (cyclic prefix, CP) in the first waveform symbol. The first communication apparatus modulates the first set to obtain a first waveform symbol. The first communication apparatus sends the first waveform symbol. A signal generated after the first sequence is modulated is consecutive with a CP in the first waveform symbol, the signal generated after the first sequence is modulated is located after the CP in the first waveform symbol, an end position of a signal generated after the second sequence is modulated is an end position in the first waveform symbol, and a position of a signal generated after the third sequence is modulated is determined based on a length of the CP in the first waveform symbol.

According to the method shown in the first aspect, in a process of obtaining the first waveform symbol, the first communication apparatus may map the second sequence and at least one of the first sequence and the third sequence to the to-be-sent data symbols based on the length of the first SCP corresponding to the first waveform symbol and the length of the CP in the first waveform symbol, to obtain the first set. The first communication apparatus may further modulate the first set to obtain the first waveform symbol. The signals obtained after the first sequence, the second sequence, and the third sequence are modulated may be used as unique words (unique words, UWs). Therefore, in this method, a guard interval between symbols can be flexibly determined based on the length of the first SCP and the length of the CP in the first waveform symbol.

In a possible implementation of the first aspect, the first waveform symbol is a discrete Fourier transform-spread-orthogonal frequency division multiplexing (discrete Fourier transformation-spread-orthogonal frequency division multiplexing, DFT-s-OFDM) symbol, and based on the first configuration information, adding the first sequence, the second sequence, and the third sequence to at least one data symbol to obtain the first set, or adding the first sequence and the second sequence to the first set, or adding the second sequence and the third sequence to the first set includes: when a difference between twice the length of the signal generated after the second sequence is modulated and the length of the first SCP is less than the length of the CP in the first waveform symbol, adding the first sequence, the second sequence, and the third sequence to the first set; or when a difference between twice the length of the signal generated after the second sequence is modulated and the length of the first SCP is not less than the length of the CP in the first waveform symbol, adding the first sequence and the second sequence to the first set. According to this implementation, a guard interval in the DFT-s-OFDM symbol used as an intermediate symbol can be further flexibly set based on a value relationship between the length of the CP in the first waveform symbol and the difference between twice the length of the signal generated after the second sequence is modulated and the length of the first SCP.

In any possible implementation of the first aspect, if the method is applied to the terminal device, the terminal device may further receive the first configuration information.

In any possible implementation of the first aspect, if the method is applied to the access network device, the access network device may further send the first configuration information.

According to a second aspect, a communication method is provided. The method may be implemented by a second communication apparatus. The first communication apparatus may be configured to receive a signal. For example, the second communication apparatus may be an access network device or a terminal device. Alternatively, the second communication apparatus may be a component in an access network device or a component in a terminal device. For example, the communication method is performed by the second communication apparatus. The communication method provided in this application may include the following steps: The second communication apparatus receives a first waveform symbol; the second communication apparatus demodulates the first waveform symbol to obtain a first set, where the first set includes P data symbols, a first sequence, a second sequence, and a third sequence, or the first set includes P data symbols, a first sequence, and a second sequence, or the first set includes P data symbols, a second sequence, and a third sequence; and the second communication apparatus determines a data symbol from the first set based on first configuration information, where the first configuration information is determined based on a length of a first SCP included in the first waveform symbol and a length of a CP in the first waveform symbol. A signal generated after the first sequence is modulated is consecutive with a CP in the first waveform symbol, the signal generated after the first sequence is modulated is located after the CP in the first waveform symbol, an end position of a signal generated after the second sequence is modulated is an end position in the first waveform symbol, and a position of a signal generated after the third sequence is modulated is determined based on a length of the CP in the first waveform symbol.

In any possible implementation of the first aspect or the second aspect, the position of the signal generated after the third sequence is modulated is specifically determined based on the length of the CP in the first waveform symbol, a length of the signal generated after the second sequence is modulated, and the length of the first SCP. According to this implementation, the position of the signal generated after the third sequence is modulated can be flexibly determined, and further, flexibility of the guard interval can be improved.

In any possible implementation of the first aspect or the second aspect, the P data symbols are included in K data symbols of a transmit end device, K is a positive integer greater than 1, and P is a positive integer less than or equal to K. When the first waveform symbol is not a last waveform symbol in a plurality of waveform symbols corresponding to the K data symbols, an end part or all of the signal generated after the second sequence is modulated is used as an SCP in a next waveform symbol of the first waveform symbol. Therefore, it may be understood that the first SCP corresponds to the next waveform symbol of the first waveform symbol. According to this implementation, when the first waveform symbol is not an end symbol in current transmission, an end part of the signal generated after the second sequence in the first waveform symbol is modulated or all of the signal generated after the second sequence is modulated may be used as the SCP in the next waveform symbol. Therefore, the guard interval can be further flexibly set.

In any possible implementation of the first aspect or the second aspect, a length of the SCP in the next waveform symbol of the first waveform symbol is equal to the length of the first SCP. According to this implementation, the length of the SCP in the next waveform symbol can be flexibly determined, and therefore, the guard interval can be further flexibly set.

In any possible implementation of the first aspect or the second aspect, the first configuration information is further determined based on at least one of M, N, and a, where M is a quantity of DFT points, N is a quantity of IDFT points, and a is related to at least one of a bandwidth, an importance level of the first waveform symbol, a modulation and coding scheme (modulation and coding scheme, MCS) corresponding to the first waveform symbol, and an error vector magnitude (error vector magnitude, EVM) corresponding to the first waveform symbol. According to this implementation, the first configuration information may be further determined based on at least one of M, N, and *a*, so that the guard interval can be further flexibly set.

In any possible implementation of the first aspect or the second aspect, the first configuration information is specifically determined based on a value relationship between $\left\lceil \frac{N_{SCP}M}{N} \right\rceil + ta$ and $\left\lceil \frac{N_{CP}M}{N} \right\rceil$, where t is a positive integer. According to this implementation, the guard interval can be further flexibly set based on the value relationship between $\left\lceil \frac{N_{SCP}M}{N} \right\rceil + ta$ and $\left\lceil \frac{N_{CP}M}{N} \right\rceil$. In this application, value obtaining manners such as rounding up, rounding down, and rounding off may be flexibly replaced with each other. In addition, a coefficient of a value result in this implementation may be adjusted based on an actual requirement, and is not limited to a coefficient setting manner used as an example herein.

In any possible implementation of the second aspect, the first waveform symbol is a DFT-s-OFDM symbol. When a difference between twice a length of the signal generated after the second sequence is modulated and the length of the first SCP is less than the length of the CP in the first waveform symbol, the first set includes the P data symbols, the first sequence, the second sequence, and the third sequence; or when a difference between twice a length of the signal generated after the second sequence is modulated and the length of the first SCP is not less than the length of the CP in the first waveform symbol, the first set includes the P data symbols, the first sequence, and the second sequence. According to this implementation, a guard interval in the DFT-s-OFDM symbol used as an intermediate symbol can be further flexibly set based on a value relationship between the length of the CP in the first waveform symbol and the difference between twice the length of the signal generated after the second sequence is modulated and the length of the first SCP.

In any possible implementation of the first aspect or the second aspect, the P data symbols are included in the K data symbols of the transmit end device, K is a positive integer greater than 1, and P is a positive integer less than or equal to K. The first waveform symbol is not a 1st waveform symbol and the last waveform symbol in the plurality of waveform symbols corresponding to the K data symbols, and the length of the first sequence is determined based on at least one of the following: the bandwidth; or the importance level of the first waveform symbol; or the MCS corresponding to the first waveform symbol; or the EVM corresponding to the first waveform symbol. According to this implementation, a length of the first sequence or a length of the signal generated after the first sequence is modulated can be flexibly determined.

In any possible implementation of the first aspect or the second aspect, the P data symbols are included in the K data symbols of the transmit end device, K is a positive integer greater than 1, and P is a positive integer less than or equal to K. The first waveform symbol is not the 1st waveform symbol and the last waveform symbol in the plurality of waveform symbols corresponding to the K data symbols, and a length of the second sequence is determined based on at least one of the following: the length of the first SCP; or the length of the first sequence; or the length of the CP in the first waveform symbol. According to this implementation, a length of the second sequence or a length of the signal generated after the second sequence is modulated can be flexibly determined.

In any possible implementation of the first aspect or the second aspect, the P data symbols are included in the K data symbols of the transmit end device, K is a positive integer greater than 1, and P is a positive integer less than or equal to K. The first waveform symbol is not the 1st waveform symbol and the last waveform symbol in the plurality of waveform symbols corresponding to the K data symbols, and a length of the third sequence is determined based on at least one of the following: the length of the first SCP; or the length of the first sequence. According to this implementation, a length of the second sequence or the length of the signal that is generated after the first sequence is modulated can be flexibly determined.

In any possible implementation of the first aspect or the second aspect, the P data symbols are included in the K data symbols of the transmit end device, K is a positive integer greater than 1, and P is a positive integer less than or equal to K. The first waveform symbol is a 1st waveform symbol in the plurality of waveform symbols corresponding to the K data symbols, a second waveform symbol is a waveform symbol before the first waveform symbol, and the second waveform symbol does not include a supplementary cyclic prefix in the first waveform symbol. According to this implementation, if the first waveform symbol is the 1st waveform symbol in the plurality of waveform symbols sent this time, a flexible setting manner of the guard interval in the DFT-s-OFDM symbol used as the intermediate symbol may be used.

In any possible implementation of the first aspect or the second aspect, a value of a CP truncation point in the first waveform symbol and values of $N_{SCP}$ - 1 sampling points before the CP truncation point are zero, and $N_{SCP}$ is a quantity of sampling points included in the first SCP. According to this implementation, circular convolution may be constructed to mitigate ICI caused by CP insufficiency.

In any possible implementation of the first aspect or the second aspect, when the first waveform symbol is an uplink waveform symbol, a length of the first sequence is determined based on a length of a second SCP, and the second SCP is determined based on a maximum delay spread length corresponding to the second waveform symbol. According to this implementation, when the first waveform symbol is a 1st waveform symbol sent this time, ISI of a previous symbol to the first waveform symbol and/or ICI caused by CP insufficiency of the first waveform symbol may be mitigated, that is, ISI and/or ICI may be mitigated. Alternatively, when the first waveform symbol is a downlink waveform symbol, the length of the first sequence is determined based on the length of the first SCP.

In any possible implementation of the first aspect or the second aspect, the P data symbols are included in the K data symbols of the transmit end device, K is a positive integer greater than 1, and P is a positive integer less than or equal to K. The first waveform symbol is the last waveform symbol in the plurality of waveform symbols corresponding to the K data symbols, the first waveform symbol is an uplink waveform symbol, and a third waveform symbol is the next waveform symbol of the first waveform symbol. When the first waveform symbol does not include an SCP in the third waveform symbol, values of last $N_{SCP}$ sampling points in the first waveform symbol are zero, where $N_{SCP}$ is a quantity of sampling points included in the first SCP; and/or the first sequence is a zero sequence.

According to this implementation, if the first waveform symbol is the last waveform symbol in the plurality of symbols sent this time, and the first waveform symbol does not include the SCP in the next waveform symbol, values of last $N_{SCP}$ sampling points in the first waveform symbol are zero, and circular convolution may be constructed to mitigate ICI caused by CP insufficiency. In addition, if the first waveform symbol is the last waveform symbol in the plurality of symbols sent this time, the first sequence may be a zero sequence, or the first UW may be a zero signal, so that ICI caused by CP insufficiency can be mitigated when the first waveform symbol is the last waveform symbol.

In any possible implementation of the first aspect or the second aspect, the length of the first SCP is determined based on at least one of the following: a maximum delay spread length corresponding to the first waveform symbol; or the length of the CP in the first waveform symbol; or the importance level of the first waveform symbol; or the MCS corresponding to the first waveform symbol; or the EVM corresponding to the first waveform symbol. According to this implementation, the first SCP can be flexibly determined, to further improve flexibility of setting the guard interval.

In any possible implementation of the first aspect or the second aspect, the length of the second SCP is further determined based on at least one of the following: a maximum delay spread length corresponding to the first waveform symbol; or the length of the CP in the first waveform symbol; or the importance level of the first waveform symbol; or the MCS corresponding to the first waveform symbol; or the EVM corresponding to the first waveform symbol. According to this implementation, the second SCP can be flexibly determined, to further improve flexibility of setting the guard interval.

In any possible implementation of the first aspect or the second aspect, the first configuration information includes one or more of the following information: a start position of the first sequence, the length of the first sequence, a start position of the second sequence, the length of the second sequence, a start position of the third sequence, and the length of the third sequence.

In any possible implementation of the second aspect, if the method is applied to the terminal device, the terminal device may further receive the first configuration information.

In any possible implementation of the second aspect, if the method is applied to the access network device, the access network device may further send the first configuration information.

According to a third aspect, a communication apparatus is provided. The apparatus may implement the method according to any one of the first aspect and the second aspect and the possible implementations of the first aspect and the second aspect. The apparatus has a function of the first communication apparatus or the second communication apparatus. The apparatus is, for example, a terminal device, a functional module in the terminal device, a network device, or a functional module in the network device.

In an optional implementation, the apparatus may include modules that are in one-to-one correspondence with the methods/operations/steps/actions according to any one of the first aspect and the second aspect and the possible implementations of the first aspect and the second aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in either of the first aspect and the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect and the second aspect and the possible implementations of the first aspect and the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fifth aspect, a computer-readable storage medium is provided. The computer-readable storage medium is configured to store a computer program or instructions. When the computer program or the instructions are run, the method according to any one of the first aspect and the second aspect and the possible implementations of the first aspect and the second aspect is implemented.

According to a sixth aspect, a computer program product including instructions is provided. When the computer program product runs on a computer, the method according to any one of the first aspect and the second aspect and the possible implementations of the first aspect and the second aspect is implemented.

According to a seventh aspect, an embodiment of this application further provides a communication apparatus, configured to perform the method according to any one of the first aspect and the second aspect and the possible implementations of the first aspect and the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the sending and receiving functions in the method according to any one of the first aspect and the second aspect and the possible implementations of the first aspect and the second aspect. The logic circuit may be further configured to transmit a message to the input/output interface, or receive, from the input/output interface, a message from another communication apparatus. The chip system may be configured to implement the method according to any one of the first aspect and the second aspect and the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication method is provided. The communication method may include the method implemented by the first communication apparatus according to any one of the first aspect and the possible implementations of the first aspect, and the method implemented by the second communication apparatus according to any one of the second aspect and the possible implementations of the second aspect.

According to a tenth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the tenth aspect, refer to the descriptions of the beneficial effects of the corresponding solutions in the first aspect and the second aspect. Details are not described herein again.

BRIEF DESCRIPTION OF DRAWINGS

FIG. 1 is a diagram of an architecture of a wireless communication system according to an embodiment of this application;

FIG. 2 is a diagram of a CP in a symbol according to an embodiment of this application;

FIG. 3 is a diagram of a manner of transmitting a waveform symbol according to an embodiment of this application;

FIG. 4 is a diagram of a manner of transmitting another waveform symbol according to an embodiment of this application;

FIG. 5 is a diagram of a manner of forming an equivalent CP according to an embodiment of this application;

FIG. 6A and FIG. 6B are diagrams of a manner of forming another equivalent CP according to an embodiment of this application;

FIG. 7 is a diagram of a manner of generating a UW according to an embodiment of this application;

FIG. 8 is a schematic flowchart of a communication method according to an embodiment of this application;

FIG. 9 is a diagram of UWs included in a waveform symbol according to an embodiment of this application;

FIG. 10A to FIG. 10C are diagrams of other UWs included in a waveform symbol according to an embodiment of this application;

FIG. 11 is a diagram of a waveform symbol CDF curve according to an embodiment of this application;

FIG. 12 is a diagram of a structure of a communication apparatus according to an embodiment of this application; and

FIG. 13 is a diagram of a structure of another communication apparatus according to an embodiment of this application.

DESCRIPTION OF EMBODIMENTS

Embodiments of this application provide a communication method and apparatus. The method and an apparatus are based on a same inventive concept. Because the method and the apparatus have a similar problem-resolving principle, for implementations of the apparatus and the method, refer to each other, and no repeated description is provided.

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system a new radio (new radio, NR) system, and a future evolved communication system a 6th generation (6th generation, 6G) mobile communication system.

Particularly, embodiments of this application may be applied to a scenario in which high-frequency phase noise is severe. This application may be applied to the following scenarios: enhanced mobile broadband (enhanced mobile broadband, eMBB), multi-station transmission (a same terminal device transmits a signal to a plurality of stations), a backhaul scenario, wireless to the x (wireless to the x, WTTx), device-to-device (device-to-device, D2D), or another scenario that has a high requirement on timing or a high requirement on a transmission rate.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "relevant (corresponding/relevant)", and "corresponding (corresponding)" may be interchangeably used sometimes. It should be noted that meanings expressed by the terms are consistent when differences are not emphasized.

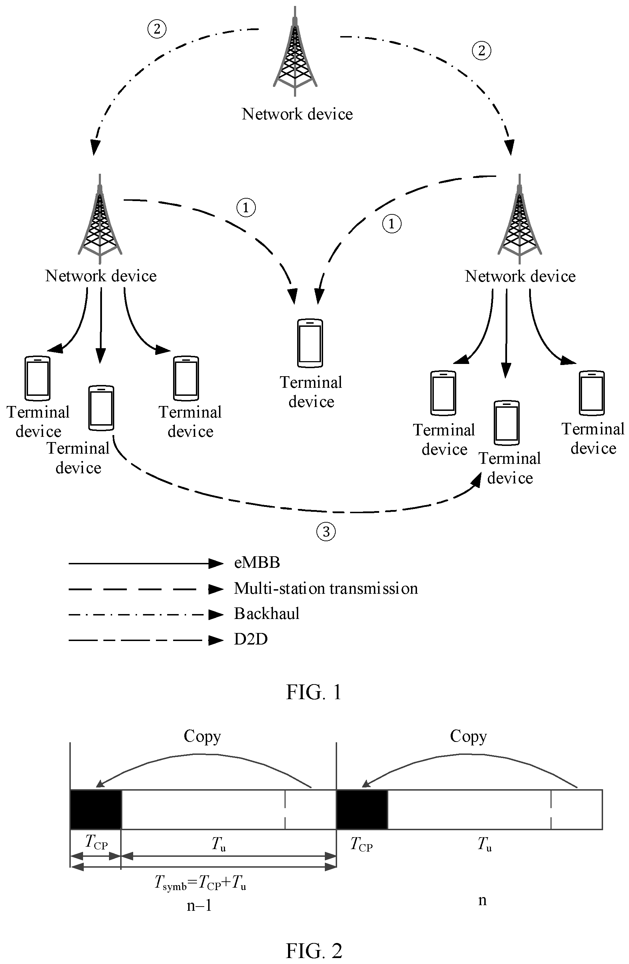

For ease of understanding embodiments of this application, a communication system shown in FIG. 1 is first used as an example to describe in detail a communication system applicable to embodiments of this application. As shown in FIG. 1, the communication system may include one or more network devices and one or more terminal devices. An interface between the network device and the terminal device may be a Uu interface (or referred to as an air interface), and data transmission may be performed between the network device and the terminal device via an air interface resource.

FIG. 1 shows an example of a scenario to which an embodiment of this application is applicable, namely, eMBB (shown by a solid line in FIG. 1), multi-station transmission (shown by a dashed line ① in FIG. 1), a backhaul scenario (shown by a dashed line ② in FIG. 1), and D2D (shown by a dashed line ③ in FIG. 1). It should be understood that the four scenarios shown in FIG. 1 are merely examples. This is not limited in embodiments of this application.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The network device may be a macro base station, a micro base station, an indoor base station, a relay node, or a donor node, or a radio controller in an open radio access network (open RAN, O-RAN, or ORAN) or a cloud radio access network (cloud radio access network, CRAN) scenario. Optionally, the network device may alternatively be a server, a wearable device, a vehicle, a vehicle-mounted device, or the like. For example, a network device in a vehicle to everything (vehicle to everything, V2X) technology may be a road side unit (road side unit, RSU). All or some functions of the network device in this application may also be implemented through a software function running on hardware, or may be implemented through an instantiated virtualization function on a platform (for example, a cloud platform). The network device in this application may alternatively be a logical node, a logical module, or software that can implement all or some functions of the network device.

In another possible scenario, a plurality of network devices collaborate to assist the terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or a CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as user equipment (user equipment, UE), a terminal device, a user apparatus, an access terminal, a subscriber unit, a subscriber station, a mobile station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal device in embodiments of this application may be a mobile phone (mobile phone), a personal digital assistant (personal digital assistant, PDA) computer, a laptop computer (laptop computer), a tablet computer (Pad), an unmanned aerial machine, a computer with wireless receiving and sending functions, a machine type communication (machine type communication, MTC) terminal device, a virtual reality (virtual reality, VR) terminal device, an augmented reality (augmented reality, AR) terminal device, an internet of things (internet of things, IoT) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device (for example, a game machine, a smart television, a smart speaker, a smart refrigerator, or fitness equipment) in a smart home (smart home), a vehicle-mounted terminal device, or an RSU having a function of a terminal device.

In embodiments of this application, unless otherwise specified, the "terminal device" may be the terminal device itself, or may be a component in the terminal device, for example, a system-on-a-chip (system-on-a-chip, SoC), and the "network device" may be the network device itself, or may be a component in the network device, for example, the SoC.

In addition, the network device and the terminal may be deployed on the land, including an indoor device, an outdoor device, a handheld device, or a vehicle-mounted device, may be deployed on the water surface, or may be deployed on a plane, a balloon, and an artificial satellite in the air. Application scenarios of the network device and the terminal device are not limited in embodiments of this application.

A communication system and a scenario described in embodiments of this application are intended to describe the technical solutions in embodiments of this application more clearly, and does not constitute a limitation on the technical solutions provided in embodiments of this application. A person of ordinary skill in the art may learn that, with evolution of network architectures and emergence of new scenarios, the technical solutions provided in embodiments of this application are also applicable to similar technical problems.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

(1) Fourier transform

The Fourier transform is one of the most important tools for signal processing in a communication system, and is used to implement conversion of a signal between time domain (time domain for short) and frequency domain (frequency domain for short).

Common Fourier transform includes discrete Fourier transform (discrete Fourier transform, DFT), fast Fourier transform (fast Fourier transform, FFT), inverse discrete Fourier transform (inverse discrete Fourier transform, IDFT), and inverse fast Fourier transform (inverse fast Fourier transform, IFFT).

DFT is to transform a time domain signal into a frequency domain signal, and FFT is a method for quickly calculating DFT. IDFT is to transform a frequency domain signal into a time domain signal, and IFFT is a method for quickly calculating IDFT.

(2) Cyclic prefix/Cyclic suffix

For a signal (or a sequence) S with a length of N, for example, S=[s_1, s_2, ..., s_N], the CP is formed by taking last L elements (L represents a length of the CP) of the sequence S, and adding a taken sequence with a length of L to the beginning of the original sequence S. A sequence with the CP added is S_CP=[s_N-L+1, ..., s_N, s_1, s_2, ..., S_N], where the CP is [s_N-L+1, ..., s_N].

For a signal (or a sequence) S with a length of N, for example, S=[s_1, s_2, ..., s_N], the cyclic suffix (cyclic suffix, CS) is formed by taking first L elements (L represents a length of the CS) of the sequence S, and adding a taken sequence with a length of L to the end of the original sequence S. A sequence with the CS added is S_CS=[s_1, s_2, ..., S_N, s_1, s_2, ..., s_L], where the CS is [s_1, s_2, ..., s_L].

(3) Oversampling and undersampling

Oversampling (oversampling) may also be referred to as upsampling, that is, increasing a quantity of sampling points. Undersampling (undersampling) may also be referred to as downsampling, that is, decreasing a quantity of sampling points.

When a waveform used for communication between a transmit end and a receive end is a single-carrier waveform, the transmit end may perform oversampling in a signal processing process, and correspondingly, the receive end may perform undersampling in the signal processing process. For example, a quantity of valid subcarriers in a scheduled bandwidth is 256, and after oversampling is performed, an output IFFT length may be 1024, and an oversampling multiple (or an upsampling factor or an oversampling factor) may be equal to a ratio of the IFFT length to the quantity of valid subcarriers, that is, 1024/256=4. The IFFT length may be equal to a sampling rate/a subcarrier width, and the IFFT length may be an integer power of 2, 3, 5, or 7.

(4) Reference signal

A network device and a terminal device may communicate with each other through a control channel and/or a data channel. The control channel may be, for example, a physical downlink control channel (physical downlink control channel, PDCCH) or a physical uplink control channel (physical uplink control channel, PDCCH), and the data channel may be, for example, a physical uplink shared channel (physical uplink shared channel, PUSCH) or a physical downlink shared channel (physical downlink shared channel, PDSCH).

The control channel or the data channel may carry the reference signal. For example, the reference signal may be a demodulation reference signal (demodulation reference signal, DMRS), a channel state information reference signal (channel state information reference signal, CSI-RS), a sounding reference signal (sounding reference signal, SRS), a tracking reference signal (tracking reference signal, TRS), a primary synchronization signal (primary synchronization signal, PSS), a secondary synchronization signal (secondary synchronization signal, SSS), or a random access signal.

It may be understood that the foregoing uses the control channel and the data channel as an example. The network device and the terminal device may further communicate with each other through another possible channel, for example, a physical broadcast channel (physical broadcast channel, PBCH).

(5) Modulation and coding scheme

Generally, the network device may indicate an MCS to the terminal device, so that the network device and the terminal device may perform uplink communication and/or downlink communication based on the MCS.

The network device may indicate the MCS to the terminal device in a plurality of manners. In a possible implementation, the network device may send indication information 1 and indication information 2 to the terminal device. The indication information 1 may indicate a target MCS table, and the indication information 2 may indicate a target MCS in the target MCS table. For example, the indication information 2 includes an index value of the target MCS. Further, the terminal device selects the target MCS table from a plurality of MCS tables based on the indication information 1, and determines the target MCS from the target MCS table based on the indication information 2. The target MCS table may include a plurality of MCS indexes (for example, an MCS index 0 to an MCS index 27), and each MCS index may correspond to one modulation order and one target bit rate. For example, if a target MCS index value included in the indication information 2 is 18, the terminal device may determine that the target MCS is the MCS 18. For example, a modulation order corresponding to the MCS 18 is 4, a target code rate corresponding to the MCS 18 is 490, and the MCS 18 may also be denoted as an MCS (4, 490).

(6) Multi-carrier waveform and single-carrier waveform

In the communication system shown in FIG. 1, communication between the network device and the terminal device is used as an example. A signal transmit end may be the terminal device, and a signal receive end may be the network device, or the signal transmit end may be the network device, and the signal receive end may be the terminal device. The following uses an example in which "the signal transmit end is the terminal device, and the signal receive end is the network device" for description. A waveform used for communication between the network device and the terminal device may be a multi-carrier waveform, or may be a single-carrier waveform. The following separately describes the multi-carrier waveform and the single-carrier waveform.

Multi-carrier means that transmit signals are arranged in parallel to form a transmit signal through an IFFT. A single carrier means that serially arranged transmit signals is convolved with a roll-off filter to form a transmit signal.

(1) Multi-carrier waveform

When the network device and the terminal device communicate with each other through the multi-carrier waveform, the transmit end (for example, the terminal device) arranges transmit signals in parallel, and forms a transmit signal through an IFFT. As shown in FIG. 2, a time domain symbol n includes a data symbol sequence, and a CP of the data symbol sequence is included between the time domain symbol n and a time domain symbol n-1. The CP may be used as a guard interval between the symbol n and the symbol n-1. For example, the multi-carrier waveform may be an orthogonal frequency division multiplexing (orthogonal frequency division multiplexing, OFDM) waveform.

(2) Single-carrier waveform

For example, the single-carrier waveform may be a single-carrier-quadrature amplitude modulation (single carrier-quadrature amplitude modulation, SC-QAM) waveform. In addition, a DFT-s-OFDM waveform is almost equivalent to a conventional single-carrier waveform, but uses a multi-carrier implementation. Therefore, the DFT-s-OFDM waveform is easily compatible with OFDM, but is still a single-carrier waveform in essence.

The following describes a diagram of a possible signal processing procedure of the network device and the terminal device by using the OFDM waveform as an example. One of the network device and the terminal device may be used as a transmit end, and the other device may be used as a receive end.

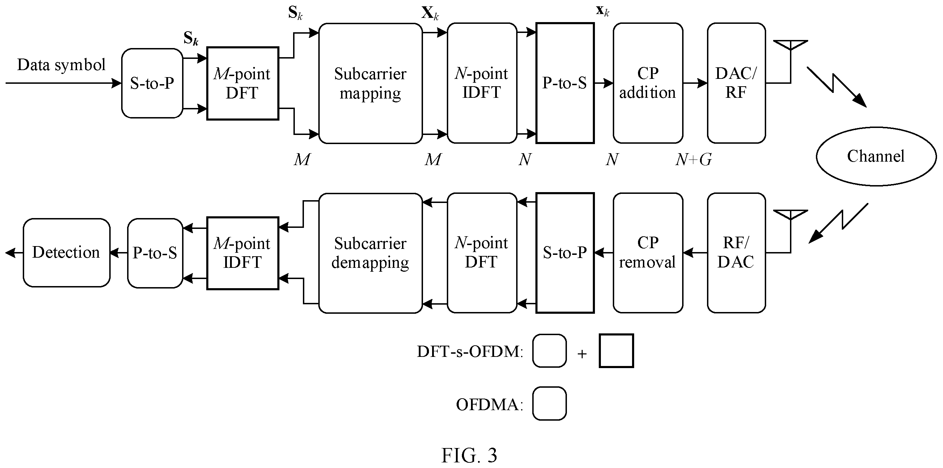

As shown in FIG. 3, the transmit end may convert serial data into an M-dimensional data block $\mathbf{S}_k = [S_k[0], S_k[1], \cdots, S_k[M-1]]^T$ through serial to parallel (serial to parallel, s-to-p) conversion, where a subscript k represents a sequence number of an OFDM symbol. The serial data may include one or more data symbols, and the data symbol may include information or data that needs to be sent by the transmit end. Through subcarrier mapping (subcarrier mapping), M symbols carried in $\mathbf{S}_k$ are used to modulate M subcarriers in N subcarriers, and the remaining (N - M) subcarriers may be understood as being modulated with 0, to obtain an N-dimensional symbol vector $\mathbf{X}_k$. N-point IDFT and parallel to serial (parallel to serial, p-to-s) conversion are performed on $\mathbf{X}_k$ to obtain a group of N complex time domain sampling points $\mathbf{x}_k = [x_k[0], x_k[1], \cdots, x_k[N-1]]^T$. Further, a guard interval is inserted at a start position of the OFDM symbol, to eliminate ISI and ICI caused by multipath propagation. The guard interval is obtained by adding a CP to the start of a symbol. Specifically, last G sampling points of $\mathbf{x}_k$ are copied and added to the start of $\mathbf{x}_k$ to obtain a time domain OFDM signal $\tilde{\mathbf{x}}_k = [x_k[N-G], \cdots, x_k[N-1], x_k[0], x_k[1], \cdots, x_k[N-1]]^T$. Therefore, one OFDM symbol includes valid data $\mathbf{x}_k$ and a cyclic prefix (redundant data). In this application, it may be considered that M and $M$ have a same meaning. Therefore, the two may be replaced with each other. In addition, it may be considered that N and $N$ have a same meaning. Therefore, the two may be replaced with each other.

A concept of a CP truncation point is described herein. The CP is equal to last $G$ sampling points (namely, $x_k[N-G], \cdots, x_k[N-1]$) of $\mathbf{x}_k$. The CP truncation point corresponds to a sampling index $N - G - 1$ of $x_k$. In other words, a next sampling value of the CP truncation point is equal to a first value of the CP.

Then, serial-to-parallel conversion is performed on the time domain signal, then a cyclic prefix (cyclic prefix, CP) is added to a converted signal, and the signal added with the cyclic prefix is sent to a digital-to-analog converter (digital-to-analog converter, DAC) and a radio frequency (radio frequency, RF) filter for signal sending. Signals sent by the transmit end are transmitted to the receive end through an antenna. The receive end sends the received signals to the RF filter and an analog-to-digital converter (analog-to-digital converter, ADC) to obtain sampling signals. After a CP is removed from the sampling signal, serial-to-parallel conversion is performed. After the conversion, N-point DFT is performed to transform time domain signals to frequency domain, and M useful signals are extracted from subcarriers in the frequency domain. This process may be referred to as subcarrier demapping (subcarrier demapping). The time domain signals are obtained, and parallel-to-serial conversion is performed to obtain serial time domain modulated signals.

It is assumed that the receive end may implement time and frequency synchronization, and a CP removal operation (that is, removing first G sampling values from the received signal) may be used to obtain a data block including N sampling values without ISI. In addition, the data block is also a circular convolution of the OFDM symbol $\mathbf{x}_k$ and a channel impulse response. The circular convolution may be effectively transformed into a frequency domain multiplication operation through FFT, and then channel equalization may be completed with low complexity through frequency domain single-tap equalization.

Optionally, for the DFT-s-OFDM waveform, on a basis of the sending process of the OFDM waveform in FIG. 3, the transmit end and the receive end additionally need to perform *M*-point DFT and *M*-point IDFT respectively. Through this operation, a DFT-s-OFDM signal has a single-carrier characteristic, and has a peak to average power ratio (peak to average power ratio, PAPR) that is much lower than that of a multi-carrier signal like an OFDM signal. Therefore, with same power amplification, DFT-s-OFDM may provide higher output power and higher power amplification efficiency, thereby improving coverage and reducing energy consumption. Advantages of DFT-s-OFDM in coverage and power consumption are particularly obvious on the terminal device side. Therefore, in existing versions of LTE and NR, DFT-s-OFDM is applied to uplink transmission.

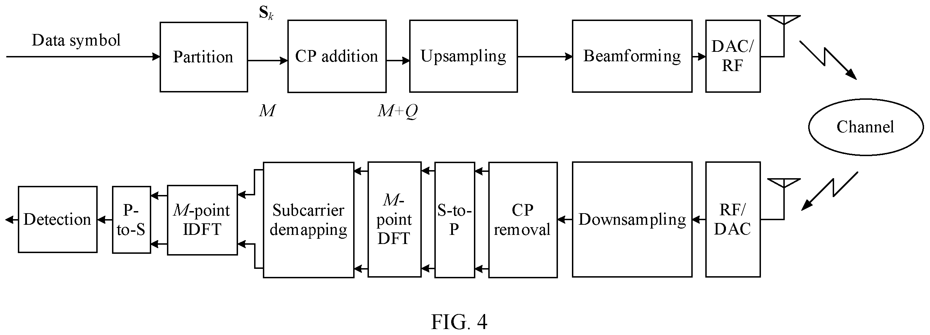

FIG. 4 is a diagram of a possible signal processing procedure of the network device and the terminal device when a single-carrier frequency domain equalization (single-carrier frequency domain equalization, SC-FDE) waveform is used. One of the network device and the terminal device may be used as a transmit end, and the other device may be used as a receive end.

At the transmit end, a phase shift keying (phase shift keying, PSK) symbol (for example, a binary phase shift keying (binary phase shift keying, BPSK) symbol, a $\pi/2$-BPSK symbol, or a quadrature phase shift keying (quadrature phase shift keying, QPSK) symbol) or quadrature amplitude modulation (quadrature amplitude modulation, QAM) symbol stream is partitioned into a series of data blocks $s_k$ with a length of M through a partition (partition) module. Further, the transmit end adds a CP with a length of Q to each data block, to be specific, copies last Q symbols of $s_k$ to the front of $s_k$ (in this case, the CP truncation point corresponds to a symbol index M - Q - 1). Further, shaping filtering, including upsampling (upsampling) and filtering (for example, root raised cosine pulse shaping (pulse shaping) filtering), is performed. Finally, the transmit end transmits a generated signal. Because of addition of the CP, a linear convolution of a multipath channel is converted into a circular convolution, and the receiver may use low-complexity single-tap frequency domain channel equalization.

The CP in FIG. 4 is added before shaping filtering. Actually, adding a CP including Q symbols before shaping filtering may also be equivalent to adding a CP including $\lfloor QP_{up} \rfloor$ or $\lceil QP_{up} \rceil$ sampling values after pulse shaping filtering, where $P_{up}$ represents an upsampling factor, and $\lfloor \rfloor$ represents a rounding-down operator. In other words, $\lfloor QP_{up} \rfloor$ or $\lceil QP_{up} \rceil$ may be understood as being equal to *G*.

It may be understood that, in this application, for the DFT-s-OFDM waveform, an upsampling factor is N/M. In addition, it may be assumed that an SC-FDE symbol and the DFT-s-OFDM symbol have a same sampling rate, namely, $\frac{N}{M} = P_{up}$ .

Currently, the following factors are mainly considered in design of a length of the CP.

(1) To completely eliminate ISI, the length of the CP needs to be greater than or equal to a maximum delay spread.

In other words, the OFDM symbol is used as an example, and it may be required that: $G \geq N_d = \left\lceil \frac{T_d}{T_s} \right\rceil$ . In this application, $N_d$ represents a quantity of sampling points included in the maximum delay spread, $T_d$ represents the maximum delay spread, $T_s$ represents the sampling interval, and $\lceil \rceil$ represents a rounding-up operator.

As shown in FIG. 2, a specific implementation is as follows: copying and adding last G samples (corresponding to a signal with a time domain length represented as $T_{CP}$) of $x_k$ (corresponding to a signal with a time domain length represented as $T_u$) to the start of $x_k$, to obtain a time domain OFDM signal $\tilde{x}_k = [x_d[N - G], \cdots, x_k[N - 1], x_k[0], x_k[1], \cdots, x_k[N - 1]]^T$, where a time domain length of the symbol is represented as $T_{symb}$. Therefore, one OFDM symbol includes valid data $x_k$ and a cyclic prefix (namely, redundant data).

That is, when the length of the CP is greater than or equal to a delay spread, ISI can be avoided, and the linear convolution of the channel can be converted into the circular convolution, thereby enabling low-complexity frequency domain channel equalization.

In addition, the cost of using the CP is that spectral efficiency (spectral efficiency) is reduced because the CP carries redundant data. A loss of the spectral efficiency may be represented as $T_{CP}/T_{symb}$, where $T_{CP}$ is duration of the CP, $T_{symb}$ is duration of one OFDM symbol, and $T_{symb} = T_{CP} + T_u$, $T_u = NT_s = 1/\Delta f$, and $\Delta f$ are subcarrier spacings. A physical meaning of $T_u$ is duration of the valid data $x_k$.

In addition, for the SC-FDE waveform, when a non-Nyquist (Nyquist) pulse is used, a shaping pulse also causes ISI. For SC-FDE, DFT-s-OFDM and OFDM modulation, when the radio frequency filter uses the non-Nyquist pulse, filtering also causes ISI. In this application, a baseband and radio frequency shaping pulse may be considered as a part of the channel, in other words, the maximum delay spread DS includes multipath introduced by the non-Nyquist pulse.

(2) A timing error should also be considered in the design of the length of the CP.

An uplink scenario is considered. A base station notifies UE of a timing advance by using a timing advance command, so that an uplink signal arrives at the base station (or access point) at expected time, and the maximum delay spread DS does not exceed the length of the CP. For example, the base station may measure any useful uplink signal to determine a propagation delay (propagation delay), and then determine the timing advance. Mathematically, the above requirement can be modeled as:

$$0 \leq T_d - t_{TA} + \tau_{prop} \leq T_{CP},$$

where

$t_{TA}$ is the timing advance, and $\tau_{prop}$ is the propagation delay. Ideally, $-t_{TA} + \tau_{prop} = 0$. However, due to reasons such as a propagation delay measurement error of the base station, a quantization error of indicated timing advance information, and a crystal oscillator frequency drift between the UE and the base station, the uplink signal experiences a receive timing error, that is, $t_{TA}$ may be greater than $\tau_{prop}$ or less than $\tau_{prop}$. If $T_{CP} = T_d$, the timing error makes $\tau_{prop}$ greater than $t_{TA}$. In this case, $T_d - t_{TA} + \tau_{prop}$ is greater than $T_{CP}$, and the symbol may be affected by ISI and ICI.

In this application, for example, a case in which ISI exists is as follows: A part of a previous symbol falls within a receive window of a current symbol. For example, a case in which ICI exists is as follows: Signals corresponding to some paths (for example, a last path) cannot completely fall within a receive FFT window. It may be understood that when the receive end transforms a signal from time domain to frequency domain through FFT, a start position and an end position of the FFT window are determined.

In addition, to minimize negative impact of ISI in the case of the timing error, the receiver often moves a position of the receive FFT window forward. An advance is generally equal to 10%~20% of the length of the CP. That is, when there is no timing error, the length of the CP is effectively decreased by 10%~20%. If a sum of $T_d$ and the advance of the RX FFT window exceeds the length of the CP, the symbol is also affected by ISI and ICI.

In a coordinated multipoint transmission (coordinated multipoint transmission, CoMP) scenario, there may be no timing error between the UE and a primary access point (primary access point). However, due to a geographical distance between the primary access point and a secondary access point (secondary access point), there is a timing error between the UE and the secondary access point. If the timing error between the UE and the secondary access point is not considered, in some cases, for example, when a sum of the timing error and the maximum delay spread DS exceeds the length of the CP, the symbol is affected by ISI and ICI. In this application, for ease of description, a case in which the sum of the timing error and the maximum delay spread exceeds the length of the CP is referred to as user CP insufficiency.

Based on the foregoing consideration of the length of the CP, currently, in a related protocol in 3GPP, the length of the CP is described as $N_{CP,l}^{\mu}$, where $l \in \left\{0, 1, \ldots, N_{slot}^{subframe,\mu} N_{symb}^{slot} - 1\right\}$ represents an index number of a symbol in a subframe, $N_{symb}^{slot}$ represents a quantity of OFDM symbols included in one slot, and $N_{slot}^{subframe,\mu}$ represents a quantity of slots included in one subframe (with duration of 1 ms) in a parameter set $\mu$. In addition, a periodicity of the OFDM symbol is described as $N_u^{\mu}$ in the protocol. A formula of $N_{CP,l}^{\mu}$ is:

$$N_u^{\mu} = 2048\kappa \cdot 2^{-\mu}$$

$$N_{CP,l}^{\mu} = \begin{cases} 512\kappa \cdot 2^{-\mu} & \text{extended cyclic prefix} \\ 144\kappa \cdot 2^{-\mu} + 16\kappa & \text{normal cyclic prefix, } l = 0 \text{ or } l = 7 \cdot 2^{\mu} \\ 144\kappa \cdot 2^{-\mu} & \text{normal cyclic prefix, } l \neq 0 \text{ and } l \neq 7 \cdot 2^{\mu} \end{cases}.$$

Herein, $\kappa = 64$. It can be seen that lengths of two CPs: a normal CP (normal CP, NCP) and an extended CP (extended CP, ECP), are supported in NR. An overhead of the NCP is approximately 144/(2048+144)=6.6%, and an overhead of the ECP is approximately 512/(512+2048)=20%. Therefore, the overhead of the ECP is much higher than the overhead of the NCP. In addition, currently, it is specified in NR that the NCP or the ECP may be used only when $\mu = 2$, that is, a subcarrier spacing is 60 kHz, and the NCP is used when $\mu$ has another value.

It may be understood that $\mu$ is an index configured for a parameter set (Numerology). When the sampling interval $T_s$ is determined, in this application, a time length may be described by using a quantity of sampling points included in the time length.

(7) SCP

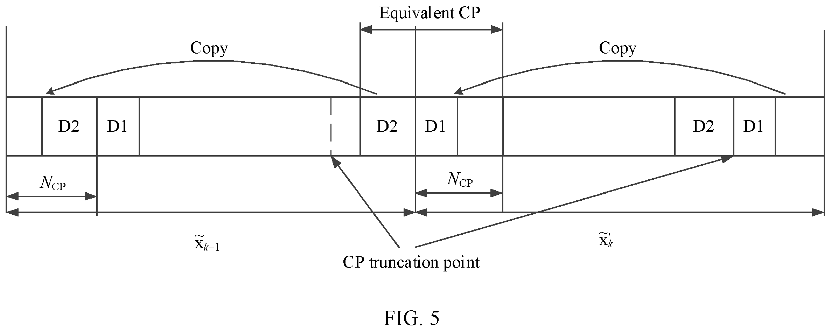

When the maximum delay spread is greater than the length of the CP, the SCP needs to be added to the symbol, so that the length of the CP is extended. The SCP and the CP are used together as an equivalent CP. For example, as shown in FIG. 5, in two symbols that are sent in serial mode, a D2 part of a previous symbol $k$ - 1 is used as an SCP in a current symbol $k$, and the SCP and a CP in the current symbol $k$ are used as an equivalent CP.

In this application, for ease of description, a length of the added SCP is denoted as $N_{SCP}$.

(8) Unique word

The unique word is generated by inserting a sequence into an IDFT output symbol or an IFFT output symbol. The UW may be used as an SCP to form an equivalent CP with the CP. Therefore, a larger guard interval may be formed based on the CP.

For example, $\mathbf{x}_k$ shown in FIG. 3 may include one or two UWs.

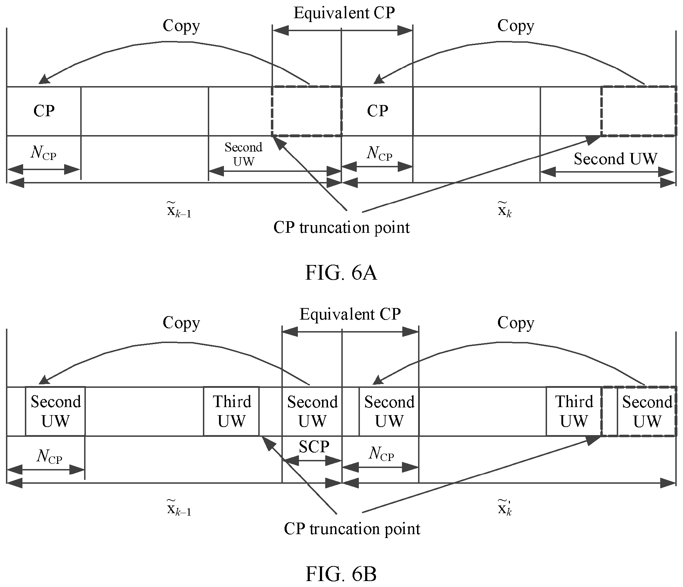

As shown in FIG. 6A, when the maximum delay spread is greater than the length of the CP, $\mathbf{x}_k$ may include only one UW, and the UW is a second UW (2nd UW). Correspondingly, in an operation of adding the CP, the transmit end may use, as the CP, a part that is in the second UW and that is after the CP truncation point. In FIG. 6A, $\tilde{\mathbf{x}}_k$ represents a time domain symbol corresponding to an output symbol $\mathbf{x}_k$, and $\tilde{\mathbf{x}}_{k-1}$ represents a time domain symbol corresponding to an output symbol $\mathbf{x}_{k-1}$.

Alternatively, when the maximum delay spread is less than or equal to the length of the CP, $\mathbf{x}_k'$ includes two UWs: a second UW and a third UW (3rd UW). The second UW is located at the end, and an end position of the third UW is before the CP truncation point. When a same symbol includes two UWs, lengths of the second UW and the third UW are equal, and both are equal to $N_{SCP}$. In addition, content of the second UW and the third UW in the same symbol may be different, or may be different, to be specific, sequences of the second UW and the third UW may be completely different, partially the same, or completely different. Optionally, the second UW in the symbol $\mathbf{x}_{k-1}$ is the same as or approximately the same as the third UW in the symbol $\mathbf{x}_k'$. As shown in FIG. 6B, a second UW in a symbol $\tilde{\mathbf{x}}_{k-1}$ including a CP is used as an SCP in a symbol $\tilde{\mathbf{x}}_k'$ including a CP. In FIG. 6B, $\tilde{\mathbf{x}}_k'$ represents a time domain symbol corresponding to an output symbol $\mathbf{x}_k'$, and $\tilde{\mathbf{x}}_{k-1}$ represents a time domain symbol corresponding to an output symbol $\mathbf{x}_{k-1}$.

It can be learned that both a UW and a CP may exist in a waveform symbol, and the UW is used as an SCP to supplement the CP, that is, an equivalent CP is used as a guard interval between symbols.

In this application, the unique word is generally a fixed sequence (which may be referred to as a UW sequence) instead of a random signal. For example, an all-zero sequence may be selected as the UW sequence.

In this application, for the DFT-s-OFDM waveform or the SC-FDE waveform, the UW may be generated in a time domain generation manner.

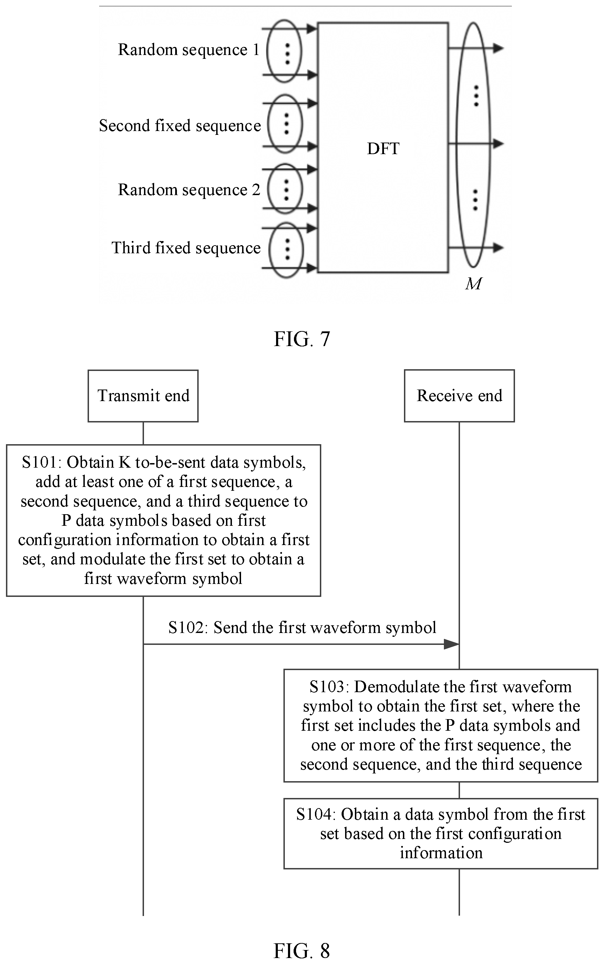

The time domain generation manner means that fixed data is placed in a DFT input, and the UW is generated through DFT. For example, as shown in FIG. 7, a second fixed sequence is modulated through DFT-s-OFDM to generate a second UW, and a third fixed sequence is modulated through DFT-s-OFDM to generate a third UW. In addition, a random sequence 1 and a random sequence 2 in FIG. 7 may be to-be-sent data symbols. For example, if a UW with a length of $N_u$ is generated in an IFFT output, $\left\lfloor N_u \frac{M}{N} \right\rfloor$, $\left\lceil N_u \frac{M}{N} \right\rceil$, or $\text{round}\left(N_u \frac{M}{N}\right)$ may be added to the DFT input, where round( ) represents rounding off.

In addition, for the SC-FDE waveform, as shown in FIG. 4, it is assumed that each data block obtained through partition includes M pieces of data. Because a UW needs to be inserted, if a block length is not changed, it is assumed that each data block obtained through partition includes $M_1$ ($M_1 < M$) pieces of data. Similar to FIG. 7, a data block with a dimension of $M_1$ may be expanded to a data block with a dimension of M by inserting a fixed sequence (including M - $M_1$ pieces of fixed data in total). Then, operations of adding a CP and performing shaping filtering are performed according to FIG. 4, and a generated SC-FDE symbol includes the UW, and a length of the UW is $\left\lfloor (M - M_1) \frac{N}{M} \right\rfloor$, $\left\lceil (M - M_1) \frac{N}{M} \right\rceil$, or $\text{round}\left((M - M_1) \frac{N}{M}\right)$.

Currently, neither an LTE communication protocol nor an NR communication protocol can flexibly configure a guard interval based on a user requirement. In some scenarios, an ISI and ICI mitigation effect is not ideal. In embodiments of this application, the guard interval may be at least one of the CP, the UW, the CS, and the like.

For example, in a current protocol, in a definition of the CP, lengths of the CP and the CS are fixed, and cannot be flexibly configured based on symbols. In addition, a manner of inserting the UW is fixed. For example, currently, it is only specified that one or two UWs are inserted into an intermediate symbol of a PDSCH or a PUSCH, and a type and/or a length of the UW cannot be flexibly set based on a transmission requirement. Therefore, there is a need to flexibly set the UW, to flexibly set the guard interval, for meeting different CP length requirements.

To flexibly configure a guard interval based on a user requirement, embodiments of this application provide a communication method. The method may be performed by a transmit end and a receive end. The transmit end may be a terminal device or a module in a terminal device, and the receive end may be a network device or a module in a network device; or the transmit end may be a network device or a module in a network device, and the receive end may be a terminal device or a module in a terminal device. The following describes the method with reference to FIG. 8. In FIG. 8, an example in which the method is performed by the transmit end and the receive end is used for description. The transmit end may be replaced with the terminal device, a terminal apparatus, the network device, a network apparatus, an access network apparatus, or the like as required. In addition, the receive end may be replaced with the terminal device, a terminal apparatus, the network device, a network apparatus, an access network apparatus, or the like as required.

As shown in FIG. 8, the method may include the following steps.

S101: The transmit end obtains K to-be-sent data symbols, and adds (or inserts) at least one of a first sequence, a second sequence, and a third sequence to P data symbols based on first configuration information to obtain a first set, and modulates the first set to obtain a first waveform symbol.

In other words, the first set includes the P data symbols, and includes the at least one of the first sequence, the second sequence, and the third sequence. Unless otherwise specified, a length of any one of the first sequence, the second sequence, and the third sequence that is added to the first set is not zero.

It may be understood that the data symbol may be information or data to be sent by the transmit end. The P data symbols may be a part or all of the K to-be-sent data symbols, where the P data symbols correspond to a same waveform symbol, that is, correspond to the first waveform symbol, or the P data symbols are carried on a same waveform symbol after being modulated, and the waveform symbol is the first waveform symbol. The transmit end may add the at least one of the first sequence, the second sequence, and the third sequence to the P data symbols by using a DFT process, to obtain the first set.

In this application, the waveform symbol may be a symbol obtained by using a modulation process of the transmit end. For example, as shown in FIG. 4, after performing operations such as subcarrier mapping, IDFT, P-to-S, and CP addition on the first set, the transmit end obtains the first waveform symbol. For example, the waveform symbol is, for example, a time domain DFT-s-OFDM symbol or an SC-FDE symbol. A length of the waveform symbol may be the same as a sum of a length of a receive window (for example, an FFT window or an IFFT window) of the receive end and a length of a CP in the first waveform symbol, and it may be considered that a start position of the waveform symbol is the same as a start position of the receive window.

Optionally, at the transmit end, a plurality of sets may be generated. Each set corresponds to one waveform symbol, to be specific, one symbol in time domain may be obtained after each set is modulated. Each set may include a plurality of data symbols, and the plurality of data symbols in one set are carried on a same waveform symbol. If the K data symbols are modulated to obtain a plurality of waveform symbols, or if the transmit end sends the plurality of waveform symbols, the first waveform symbol may be a $1^{st}$ waveform symbol or a last waveform symbol in the plurality of waveform symbols, or the first waveform symbol may be an intermediate waveform symbol located between a $1^{st}$ waveform symbol and a last waveform symbol, that is, the first waveform symbol may not be the $1^{st}$ waveform symbol or the last waveform symbol.

In this application, any one or more of the first sequence, the second sequence, and the third sequence may be used to generate a UW, or any one or more of the first sequence, the second sequence, and the third sequence may be a UW sequence. For example, a signal generated after the first sequence is modulated may be used as a first UW (1st UW) in the first waveform symbol, a signal generated after the second sequence is modulated may be used as a second UW in the first waveform symbol, and a signal generated after the third sequence is modulated may be used as a third UW in the first waveform symbol.

In the following, the first UW is used as an example of the signal generated after the first sequence is modulated, the second UW is used as an example of the signal generated after the second sequence is modulated, and the third UW is used as an example of the signal generated after the third sequence is modulated.

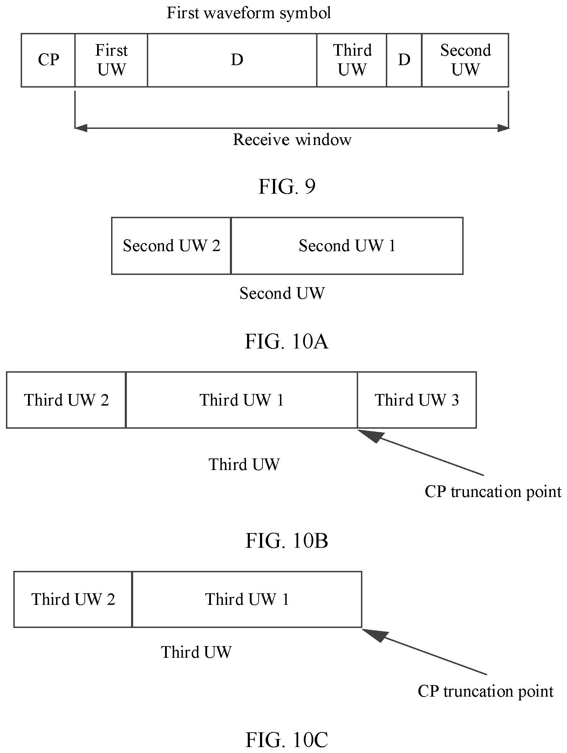

As shown in FIG. 9, when the transmit end maps the first sequence, the second sequence, and the third sequence to the first set, that is, when the first waveform symbol includes the first UW, the second UW, and the third UW, the first UW may be located after the CP in the first waveform symbol, the first UW may be consecutive with the CP, the second UW may be located at an end position of the first waveform symbol, and the third UW is located between the first UW and the second UW. A position of the third UW may be determined based on the length of the CP in the first waveform symbol. In FIG. 9, "D" represents a data symbol. For example, the position of the third UW is related to a position of a CP truncation point, and the position of the CP truncation point is related to the length of the CP in the first waveform symbol. For example, an index of the CP truncation point in sampling points of the first waveform symbol is $N - G - 1$, where $N$ is a total quantity of sampling points of the first waveform symbol, and $G$ is a quantity of sampling points included in the length of the CP in the first waveform symbol. In an example, the position of the third UW is further related to at least one of a length of the second UW and a length of a first SCP.

It may be understood that the signal generated after the first sequence is modulated, the signal generated after the second sequence is modulated, and the signal generated after the third sequence is modulated may be respectively used as symbol components in the first waveform symbol. To be specific, the signal generated after the first sequence is modulated or the first UW may be used as a symbol component in the first waveform symbol, and the symbol component in the first waveform symbol is located after the CP in the first waveform symbol and is consecutive with the CP. The signal generated after the second sequence is modulated or the second UW may be used as a symbol component in the first waveform symbol, and the symbol component may be located at the end position of the first waveform symbol. The signal generated after the third sequence is modulated or the third UW may be used as a symbol component in the first waveform symbol, and a position of the symbol component may be determined based on the length of the CP in the first waveform symbol.

In this application, the first SCP may be a length of an SCP required by a next waveform symbol of the first waveform symbol, that is, the first SCP may correspond to the next waveform symbol, and the length of the first SCP may be configured by the network device. If the transmit end sends the plurality of waveform symbols, and the first waveform symbol is not the last waveform symbol, a signal at the end of the second UW or all signals of the second UW may be used as the SCP in the next waveform symbol, to extend a CP in the next waveform symbol, thereby improving demodulation performance of the next waveform symbol.

In a possible implementation, as shown in FIG. 10A to FIG. 10C, the second UW may be split into two sub-second UWs: a second UW 1 and a second UW 2, where an end position of the second UW 1 is the end position of the first waveform symbol. In addition, the third UW may be split into three sub-third UWs: a third UW 1, a third UW 2, and a third UW 3. In this case, the third UW 3 is located after the CP truncation point, and the third UW 2 and the third UW 1 are located before the CP truncation point. Alternatively, the third UW may be split into two sub-third UWs: a third UW 1 and a third UW 2, where an end position of the third UW 1 is the CP truncation point.

Optionally, the position of the third UW in the first waveform symbol may be determined based on the CP in the first waveform symbol. For example, the position of the third UW is related to the position of the CP truncation point, and the position of the CP truncation point is related to the length of the CP in the first waveform symbol.

The following describes, with reference to embodiments, determining and sending of a position of the signal generated after the third sequence is modulated. Details are not described herein.

In an example, the data symbol may be the serial data corresponding to the example of the signal processing procedure in FIG. 3 or FIG. 4. The first set may be a set including at least one of the data symbol, the first sequence, the second sequence, and the third sequence. When the first waveform symbol is a DFT-s-OFDM symbol, and a UW is generated in a time domain generation manner, the transmit end may add the at least one of the first sequence, the second sequence, and the third sequence to the P data symbols in the DFT process in FIG. 3, to obtain the first set. For example, refer to the UW generation manner shown in FIG. 7. The first sequence, the second sequence, and the third sequence may be used as fixed sequences, and the P data symbols may be used as the random sequence 1 and/or the random sequence 2. The transmit end may further obtain the first waveform symbol by performing S-toP, subcarrier mapping, IDFT, P-to-S, CP addition, DAR, RF, and the like on the first set including the foregoing sequences, and send the first waveform symbol through communication.

It may be understood that, for an SC-FDE symbol, because the transmit end does not perform DFT and IDFT operations, a manner in which the transmit end may map (or insert) the at least one of the first sequence, the second sequence, and the third sequence to the first set including the data symbols during partition may be implemented with reference to a manner for the DFT-s-OFDM symbol.

The following specifically describes S101 with reference to a manner of determining the first configuration information. Details are not described herein.

S102: The transmit end sends the first waveform symbol. Correspondingly, the receive end receives the first waveform symbol.

The signal sending process shown in FIG. 4 is used as an example. The transmit end may send, through an air interface channel, a radio signal corresponding to the first waveform symbol. The radio signal may be obtained through processing by components like DAC, RF, and the like on the first waveform symbol. Correspondingly, the receive end may receive the radio signal corresponding to the first waveform symbol.

The first waveform symbol at the receive end may be a symbol obtained by the receive end by performing operations such as RF and DAC.

S103: The receive end demodulates the first waveform symbol to obtain the first set, where the first set includes the P data symbols and one or more of the first sequence, the second sequence, and the third sequence.

FIG. 4 is used as an example. A demodulation process performed by the receive end may include removing the CP from the first waveform symbol and performing S-to-P conversion, DFT, and subcarrier mapping. Optionally, the demodulation process may further include IDFT.

S104: The receive end obtains a data symbol from the first set based on the first configuration information.

Data symbols included in the first set may be the P data symbols in S101.

For example, the receive end may obtain, from the first set based on positions and lengths of one or more of the first sequence, the second sequence, and the third sequence, a symbol or symbols other than the first sequence, the second sequence, and the third sequence. The symbol is a data symbol, or the symbols are data symbols. The data symbol may be information or data that needs to be sent by the transmit end to the receive end.

It may be understood that, if the receive end is an access network device, S104 may alternatively be replaced with the following: The network device obtains the data symbol from the first set based on the length of the first SCP and the length of the CP in the first waveform symbol. For example, the network device may determine, based on the length of the first SCP and the length of the CP in the first waveform symbol, a position and a length of a sequence (for example, the at least one of the first sequence, the second sequence, and the third sequence) included in the first set, to obtain a data symbol other than the sequence in the first set. A reason is that the first configuration information may be determined by the network device based on the length of the first SCP and the length of the CP in the first waveform symbol.

In a possible implementation, the first configuration information is further determined based on at least one of M, N, and *a*. To be specific, the network device may obtain the data symbol from the first set based on the length of the first SCP, the length of the CP in the first waveform symbol, and the at least one of M, N, and *a*.

In the procedure shown in FIG. 8, a type of the sequence included in the first set may be determined based on the length of the first SCP and the length of the CP in the first waveform symbol. Therefore, a cyclic prefix can be flexibly configured, and a guard interval between symbols can be flexibly configured.

The following describes an implementation of the first configuration information in S101.

It may be understood that the first configuration information may indicate sequences included in the first set. Therefore, the transmit end may map the at least one of the first sequence, the second sequence, and the third sequence to the first set based on the first configuration information.

In this application, the first configuration information is determined based on the length of the first SCP and the length of the CP in the first waveform symbol. Therefore, the UW can be flexibly determined based on the first SCP and the CP in the first waveform symbol. If the transmit end is used as the network device and the receive end is used as the terminal device, the first configuration information may be determined by the transmit end based on the length of the first SCP and the length of the CP in the first waveform symbol, and the transmit end may further send the first configuration information to the receive end. Alternatively, if the receive end is used as the network device and the transmit end is used as the terminal device, the first configuration information may be determined by the receive end based on the length of the first SCP and the length of the CP in the first waveform symbol, and the transmit end may further receive the first configuration information from the receive end. In addition, if the transmit end is used as the network device, the network device may determine, based on the length of the first SCP and the length of the CP in the first waveform symbol, to add the at least one of the first sequence, the second sequence, and the third sequence to the first set.

In a possible implementation, the first configuration information is further determined based on at least one of M, N, and *a*. To be specific, the network device may add the at least one of the first sequence, the second sequence, and the third sequence to the first set based on the length of the first SCP, the length of the CP in the first waveform symbol, and the at least one of M, N, and *a*.

Herein, M is a quantity of DFT points, and N is a quantity of IDFT points. In addition, M may also be understood as a bandwidth or a quantity of subcarriers.

*a* is a non-negative integer, and a value may be related to at least one of M, an importance level of the first waveform symbol, a modulation and coding scheme MCS corresponding to the first waveform symbol, and an EVM corresponding to the first waveform symbol (namely, an EVM required by the first waveform symbol). Importance of a symbol may indicate an importance level of the symbol. Transmission of a symbol with a high importance level may be preferentially guaranteed, and transmission of a symbol with a low importance level may not be preferentially guaranteed. For example, in some cases, transmission performance of the symbol with the low importance level may be sacrificed or reduced, to ensure or improve transmission performance of the symbol with the high importance level. For example, the importance level of the symbol may be related to a performance requirement of the symbol, or related to content carried by the symbol. For example, an importance level of a symbol used to carry a reference signal like a DMRS is higher than an importance level of a symbol used to carry data.

In a possible manner, the non-negative integer *a* may be configured as a percentage relative to the transmission bandwidth M. For example, *a* is (approximately) one percent of M, that is, $a = \left\lceil \frac{M}{100} \right\rceil$.

In addition, for a common data symbol (which does not require high reliability) that has a lower importance level and that is located in a data shared channel, redundancy is introduced through coding. In addition, a used modulation scheme further has a specific anti-interference capability. Therefore, *a* smaller than the symbol with the high importance level may be used. An advantage of using smaller *a* is that overheads of the UW are reduced, thereby improving spectral efficiency. *a* may also be related to the MCS or the required EVM. Generally, if a modulation order in the MCS is lower and/or a code rate of coding is lower, smaller *a* may be used. If the required EVM is larger, smaller *a* may be used.

For example, the first configuration information may be determined based on a value relationship between

$\left\lceil \frac{N_{SCP}M}{N} \right\rceil + ta$ and $\left\lceil \frac{N_{CP}M}{N} \right\rceil$. Herein, t is a positive number or a positive integer. For example, a value of t is 1 or 2. In addition, on a basis of an appropriate transformation of the foregoing formula, the first configuration information may alternatively be determined based on another value relationship. For example, the first configuration information is determined based on the value relationship between $q * \left\lceil \frac{N_{SCP}M}{N} \right\rceil + ta$ and $p * \left\lceil \frac{N_{CP}M}{N} \right\rceil$, where q and p are non-negative coefficients.

It may be understood that, in a calculation process in embodiments of this application, when a calculation result is not an integer, rounding up or rounding down is performed. In this application, value obtaining manners such as rounding up, rounding down, and rounding off may be replaced with each other. For example, $\left\lceil \frac{N_{SCP}M}{N} \right\rceil$ herein may be replaced with $\left\lfloor \frac{N_{SCP}M}{N} \right\rfloor$. The following describes a manner of determining the first configuration information with reference to embodiments. Details are not described herein.

In embodiments of this application, the first SCP may be determined based on at least one of a delay spread length $N_d$ corresponding to the first waveform symbol, the length of the CP in the first waveform symbol, the importance level of the first waveform symbol, the MCS corresponding to the first waveform symbol, and the EVM corresponding to the first waveform symbol.

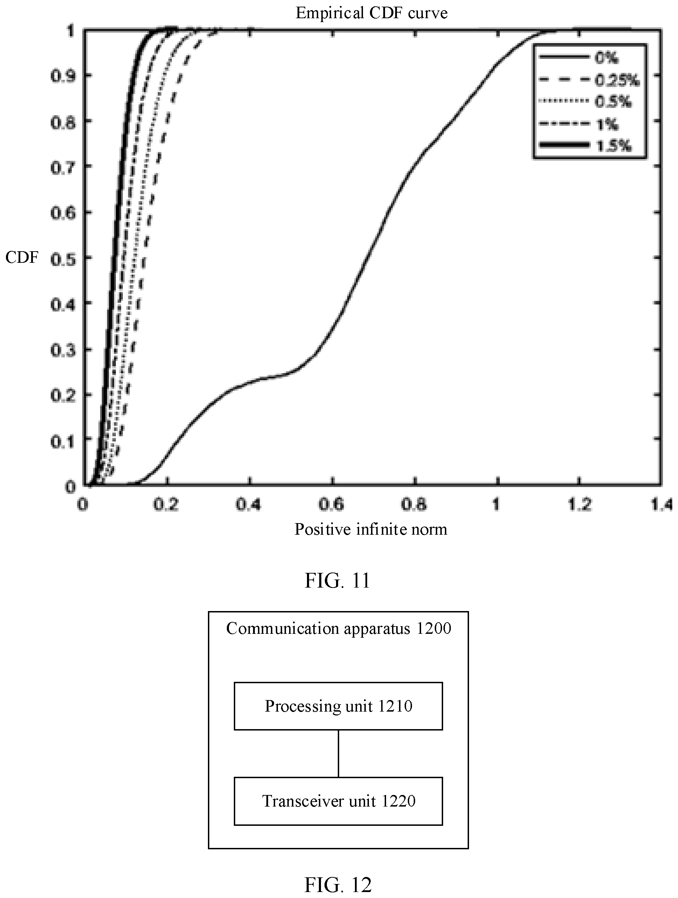

In an example, for the symbol with the high importance level, to ensure that demodulation or parameter estimation performance of the symbol is not affected, it is required that the symbol is not interfered or is interfered with slightly. On a basis of this requirement, $N_{SCP}$ is similar to $N_d - N_{CP}$, for example, $N_{SCP} = N_d - N_{CP}$ or $N_{SCP} = 0.9(N_d - N_{CP})$. In addition, to make an error smaller when the second UW 1 is used as the SCP, $a$ needs to be larger. $e_k$ is defined as a difference between the second UW 1 and the third UW 1 of the next symbol. FIG. 11 shows a cumulative distribution function (cumulative distribution function, CDF) curve of an infinite norm (an absolute value of a maximum element in a vector) of $e_k$. It can be seen that, compared with a case of $a = 0$, when $a$ is (approximately) 1.5% of M, an error may be significantly reduced. For example, there is only a 10% probability that the infinite norm exceeds 0.1.

For a common data symbol (which does not require high reliability) that has a lower importance level and that is located in a data shared channel, redundancy is introduced through coding. In addition, a used modulation scheme further has a specific anti-interference capability. Therefore, $N_{SCP}$ shorter than the symbol with the high importance level may be used. An advantage of using shorter $N_{SCP}$ is that overheads of the UW are reduced, thereby improving spectral efficiency. $N_{SCP}$ may also be related to the MCS or the required EVM. Generally, if a modulation order in the MCS is lower and/or a code rate of coding is lower, smaller $N_{SCP}$ may be used, and/or if the required EVM is larger, smaller $N_{SCP}$ may be used.

As an example of the first configuration information, the first configuration information may include at least one of a parameter of the first sequence (or the first UW), a parameter of the second sequence (or the second UW), and a parameter of the third sequence (or the third UW), and indicates that the at least one of the first sequence, the second sequence, and the third sequence is added to the first set. For example, if the first configuration information includes the parameter of the first sequence, it indicates that the first set includes the first sequence.

Optionally, the parameter of the sequence may include a start position of a sequence and/or a length of the sequence (or a UW). The start position may be indicated by using an index of the sequence in the first set. The length may be represented by using a quantity of bits or sampling points included in the sequence.

The following describes a manner of determining lengths of the first UW, the second UW, and the third UW in this application.

When the first waveform symbol is an intermediate waveform symbol, the length of the first UW is related to at least one of M (or the bandwidth), the symbol importance level of the first waveform symbol, the MCS corresponding to the first waveform symbol, and the EVM corresponding to the first waveform symbol.

In addition, when the first waveform symbol is the 1st waveform symbol in the plurality of waveform symbols corresponding to the K data symbols, if the first waveform symbol is an uplink symbol, that is, the first waveform symbol is sent by the terminal device to the access network device, the length of the first sequence (or the first UW) is determined based on a length of a second SCP. The length of the second SCP is determined at least based on a maximum delay spread length corresponding to a second waveform symbol. Optionally, the length of the second SCP may be further determined based on at least one of a maximum delay spread length $N_d$ corresponding to the first waveform symbol, the length of the CP in the first waveform symbol, the importance level of the first waveform symbol, the MCS corresponding to the first waveform symbol, and the EVM corresponding to the first waveform symbol. For a value association relationship between the length of the second SCP and the at least one of the maximum delay spread length $N_d$ corresponding to the first waveform symbol, the length of the CP in the first waveform symbol, the importance level of the first waveform symbol, the MCS corresponding to the first waveform symbol, and the EVM corresponding to the first waveform symbol, refer to the descriptions of the length of the first SCP. Details are not described again.

In addition, when the first waveform symbol is the 1st waveform symbol in the plurality of waveform symbols corresponding to the K data symbols, if the first waveform symbol is an uplink symbol, the length of the first UW may be the length of the first SCP.

It may be understood that the second waveform symbol is a waveform symbol that is located before the first waveform symbol in time domain. The second waveform symbol may be consecutive with the first waveform symbol. Optionally, the second waveform symbol and the first waveform symbol are sent by a same terminal device, or the second waveform symbol and the first waveform symbol are sent by different terminal devices respectively.

In addition, in embodiments of this application, the length of the second UW may be related to at least one of the length of the first SCP, the length of the first sequence, and the length of the CP in the first waveform symbol. The length of the third UW is related to the length of the first SCP and/or the length of the first sequence or the first UW.

The following describes, with reference to embodiments, a manner of determining the sequence included in the first set, namely, a sequence length. For ease of description, embodiments are distinguished based on different positions of the first waveform symbol in the plurality of waveform symbols corresponding to the K data symbols and a symbol type of the first waveform symbol.

Embodiment 1: The first waveform symbol is an intermediate symbol, and the first waveform symbol is a DFT-s-OFDM symbol. According to an association relationship between the length $N_{SCP}$ of the first SCP and the length $N_{CP}$ of the CP in the first waveform symbol, Embodiment 1 may include Embodiment 1-1 and Embodiment 1-2.

Embodiment 1-1: The value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a < \left\lceil \frac{N_{CP}M}{N} \right\rceil$.

Optionally, $a = \left\lceil \frac{M}{100} \right\rceil$.

The value relationship may alternatively be described as follows: A difference between twice the length of the second UW and the length of the first SCP is less than the length of the CP in the first waveform symbol.

When the condition in Embodiment 1-1 is met, the first set includes the first sequence, the second sequence, and the third sequence, or the first waveform symbol includes the first UW, the second UW, and the third UW. In this case, the CP truncation point is located within a range of the third UW.

The length of the first UW in the first waveform symbol is $\left\lfloor \frac{aN}{M} \right\rfloor$. The length of the second UW is $\left\lfloor \frac{\left(\left\lceil \frac{N_{SCP}M}{N} \right\rceil + a\right)N}{M} \right\rfloor$.

The length of the third UW is $\left\lfloor \frac{\left(\left\lceil \frac{N_{SCP}M}{N} \right\rceil + 2a\right)N}{M} \right\rfloor$. When $a = 0$, the first UW does not exist, that is, the length is zero.

Optionally, in Embodiment 1-1, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is $\left\lfloor \frac{\left(\left\lceil \frac{N_{SCP}M}{N} \right\rceil + a\right)N}{M} \right\rfloor - N_{SCP}$.

In addition, in Embodiment 1-1, the third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor \frac{aN}{M} \right\rfloor$, and a length of the third UW 3 is $\left\lfloor \frac{\left(\left\lceil \frac{N_{SCP}M}{N} \right\rceil + 2a\right)N}{M} \right\rfloor - N_{SCP} - \left\lfloor \frac{aN}{M} \right\rfloor$.

In Embodiment 1-1, the second UW 1 may be used as an SCP in the next symbol, that is, the third UW 1 of the first waveform symbol is equal to a third UW 1 of the next waveform symbol.

Embodiment 1-2: The value relationship between the length $N_{SCP}$ of the first SCP and the length $N_{CP}$ of the CP in the first waveform symbol meets the following: $N_{SCP}$ is less than $N_{CP}$, and $\left\lceil \frac{N_{SCP}M}{N} \right\rceil + 2a \geq \left\lceil \frac{N_{CP}M}{N} \right\rceil$; or $N_{SCP}$ is greater than or equal to $N_{CP}$.

Optionally, $a = \left\lceil \frac{M}{100} \right\rceil$.

The value relationship may alternatively be described as follows: A difference between twice the length of the second UW and the length of the first SCP is not less than the length of the CP in the first waveform symbol.

When the condition in Embodiment 1-2 is met, the first set includes the first sequence and the second sequence, or the first waveform symbol includes the first UW and the second UW. In this case, the CP truncation point is located within a range of the second UW.

The length of the first UW in the first waveform symbol is $\left\lfloor \frac{aN}{M} \right\rfloor$. The length of the second UW is

$$N_{CP} + \left\lceil \frac{\left(\left\lceil \frac{N_{SCP}M}{N} \right\rceil + a\right)N}{M} \right\rceil .$$

Optionally, in Embodiment 1-2, the second UW may be split into two sub-UWs: a second UW 1 and a second UW 2 whose end positions are the end of the symbol, as shown in FIG. 10A. A length of the second UW 1 is $N_{SCP}$, and a length of the second UW 2 is

$$N_{CP} + \left\lceil \frac{\left(\left\lceil \frac{N_{SCP}M}{N} \right\rceil + a\right)N}{M} \right\rceil - N_{SCP} .$$

In Embodiment 1-2, the second UW 1 may be used as an SCP in the next waveform symbol of the first waveform symbol.

Embodiment 2: The first waveform symbol is an intermediate symbol, and the first waveform symbol is an SC-FDE symbol. According to an association relationship between the length $N_{SCP}$ of the first SCP and the length $N_{CP}$ of the CP in the first waveform symbol, Embodiment 2 may include Embodiment 2-1 and Embodiment 2-2.

Embodiment 2-1: The value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + a \leq \left\lceil \frac{N_{CP}M}{N} \right\rceil .$

Optionally, $a = \left\lceil \frac{M}{100} \right\rceil .$

The value relationship represented by "$\left\lceil \frac{N_{SCP}M}{N} \right\rceil + a \leq \left\lceil \frac{N_{CP}M}{N} \right\rceil$" may alternatively be described as follows: The length of the second UW is less than the length of the CP in the first waveform symbol.

When the condition in Embodiment 2-1 is met, the first set includes the second sequence and the third sequence, or the first waveform symbol includes the second UW and the third UW. In this case, the CP truncation point is the end position of the third UW.

The length of the second UW is $\left\lceil \frac{\left(\left\lceil \frac{N_{SCP}M}{N} \right\rceil + a\right)N}{M} \right\rceil$ , and the length of the third UW is $\left\lceil \frac{\left(\left\lceil \frac{N_{SCP}M}{N} \right\rceil + a\right)N}{M} \right\rceil .$

Optionally, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is

$$\left\lceil \frac{\left(\left\lceil \frac{N_{SCP}M}{N} \right\rceil + a\right)N}{M} \right\rceil - N_{SCP} .$$

In Embodiment 2-1, the second UW 1 may be used as an SCP in the next waveform symbol.

Optionally, as shown in FIG. 10C, the third UW may be split into two sub-UWs: a third UW 1 and a third UW 2 whose end positions are the CP truncation point. A length of the third UW 1 is $N_{SCP}$, and a length of the third UW 2 is

$$\left\lceil \frac{\left(\left\lceil \frac{N_{SCP}M}{N} \right\rceil + a\right)N}{M} \right\rceil - N_{SCP} .$$

Embodiment 2-2: The value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + a \geq \left\lceil \frac{N_{CP}M}{N} \right\rceil$ ; or $N_{SCP}$ is greater than or equal to $N_{CP}$.

The value relationship represented by "$\left\lceil \frac{N_{SCP}M}{N} \right\rceil + a \geq \left\lceil \frac{N_{CP}M}{N} \right\rceil$" may alternatively be described as follows: The length of the second UW is not less than the length of the CP in the first waveform symbol.

When the condition in Embodiment 2-1 is met, the first set includes the second sequence, or the first waveform symbol includes the second UW. In this case, the CP truncation point is located within a range of the second UW.

In this embodiment, the length of the second UW is

$$N_{CP} + \left\lceil \frac{\left(\left\lceil \frac{N_{SCP}M}{N} \right\rceil + a\right)N}{M} \right\rceil .$$

Optionally, the second UW may be split into two UWs: a second UW 1 and a second UW 2 whose end positions are at the end of the symbol, as shown in FIG. 10A. A length of the second UW 1 is $N_{SCP}$, and a length of the second UW 2 is

$$N_{CP} + \left\lceil \frac{\left(\left\lceil \frac{N_{SCP}M}{N} \right\rceil + a\right)N}{M} \right\rceil - N_{SCP} .$$

In Embodiment 2-2, the second UW 1 may be used as an SCP in the next waveform symbol.

It can be seen that, although both the DFT-s-OFDM symbol and the SC-FDE symbol are single-carrier signals, the two symbols differ in a quantity of UWs and duration. For example, the first waveform symbol in the SC-FDE symbol in Embodiment 2 does not include the first UW. A reason for this difference is that, in DFT-s-OFDM modulation, circular convolution is performed between a data symbol and a shaping pulse, while in SC-FDE modulation, linear convolution is performed between a data symbol and a shaping pulse. In addition, in the DFT-s-OFDM symbol, a CP is added after IFFT. In SC-FDE, a CP is added before shaping filtering.

It may be understood that, in Embodiment 1 and Embodiment 2, each UW is generated in a time domain generation manner.

Embodiment 3: The first waveform symbol is the 1st waveform symbol in the plurality of waveform symbols corresponding to the K data symbols, and the first waveform symbol is a DFT-s-OFDM symbol. In Embodiment 3, according to a symbol status within duration of a previous waveform symbol of the first waveform symbol and an association relationship between the length $N_{SCP}$ of the first SCP and the length $N_{CP}$ of the CP in the first waveform symbol, Embodiment 3 may include Embodiment 3-1, Embodiment 3-2, Embodiment 3-3, and Embodiment 3-4.

In Embodiment 3-1, no symbol of another user is transmitted within the duration corresponding to the previous symbol of the first waveform symbol, or there is a zero tail at the end of the previous symbol. In other words, there is no signal transmission on the previous symbol of the first waveform symbol.

In addition, in Embodiment 3-1, the value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a < \left\lceil \frac{N_{CP}M}{N} \right\rceil$ .

Optionally, $a = \left\lceil \frac{M}{100} \right\rceil$ .

The value relationship represented by " $\left\lceil \frac{N_{SCP}M}{N} \right\rceil + 2a < \left\lceil \frac{N_{CP}M}{N} \right\rceil$ " may alternatively be described as follows: A difference between twice the length of the second UW and the length of the first SCP is less than the length of the CP in the first waveform symbol.

When the condition in Embodiment 3-1 is met, the first set includes the first sequence, the second sequence, and the third sequence, or the first waveform symbol includes the first UW, the second UW, and the third UW. In this case, the CP truncation point is located within a range of the third UW.

The length of the first UW in the first waveform symbol is $\left\lfloor \frac{aN}{M} \right\rfloor$ . The length of the second UW is $\left\lfloor \frac{\left(\left\lceil \frac{N_{SCP}M}{N} \right\rceil + a\right)N}{M} \right\rfloor$ .

The length of the third UW is $\left\lfloor \frac{\left(\left\lceil \frac{N_{SCP}M}{N} \right\rceil + 2a\right)N}{M} \right\rfloor$ . When $a = 0$, the first UW does not exist, that is, the length is zero.

Optionally, in Embodiment 3-1, the second UW may be split into two sub-UWs: a second UW 1 and a second UW 2 whose end positions are the end of the symbol, as shown in FIG. 10A. A length of the second UW 1 is $N_{SCP}$, and a length of the second UW 2 is $\left\lfloor \frac{\left(\left\lceil \frac{N_{SCP}M}{N} \right\rceil + a\right)N}{M} \right\rfloor - N_{SCP}$ .

In addition, in Embodiment 3-1, the third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor \frac{aN}{M} \right\rfloor$ , and a length of the third UW 3 is $\left\lfloor \frac{\left(\left\lceil \frac{N_{SCP}M}{N} \right\rceil + 2a\right)N}{M} \right\rfloor - N_{SCP} - \left\lfloor \frac{aN}{M} \right\rfloor$ .

Optionally, the third UW 1 may be a zero signal, in other words, all sampling points of the third UW1 are zero. To be specific, values of the CP truncation point in the first waveform symbol and $N_{SCP}$ - 1 sampling points before the CP truncation point are zero. An advantage of this design is to construct circular convolution to mitigate ICI caused by CP insufficiency.

In Embodiment 3-1, the second UW 1 may be used as an SCP in the next symbol.

Embodiment 3-2: There is no signal transmission on a previous symbol of the first waveform symbol, and the value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a \geq \left\lceil \frac{N_{CP}M}{N} \right\rceil$ ; or $N_{SCP}$ is greater than or equal to $N_{CP}$.

Optionally, $a = \left\lceil \frac{M}{100} \right\rceil$ .

The value relationship represented by " $\left\lceil \frac{N_{SCP}M}{N} \right\rceil + 2a \geq \left\lceil \frac{N_{CP}M}{N} \right\rceil$ " may alternatively be described as follows: A difference between twice the length of the second UW and the length of the first SCP is not less than the length of the CP in the first waveform symbol.

When the condition in Embodiment 3-2 is met, the first set includes the first sequence and the second sequence, or the first waveform symbol includes the first UW and the second UW. In this case, the CP truncation point is located within a range of the second UW.

The length of the first UW in the first waveform symbol is $\left\lfloor \frac{aN}{M} \right\rfloor$. The length of the second UW is $N_{CP}$ +

$$\left\lfloor \frac{\left(\left\lceil \frac{N_{SCP}M}{N} \right\rceil + a\right)N}{M} \right\rfloor .$$

Optionally, in Embodiment 3-2, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is

$$N_{CP} + \left\lfloor \frac{\left(\left\lceil \frac{N_{SCP}M}{N} \right\rceil + a\right)N}{M} \right\rfloor - N_{SCP} .$$

Optionally, a signal at the CP truncation point and a signal on a left side of the CP truncation point in the second UW are zero signals, and a length of the zero signal is $N_{SCP}$, to construct circular convolution to mitigate ICI caused by CP insufficiency. To be specific, values of the CP truncation point in the first waveform symbol and $N_{SCP}$ - 1 sampling points before the CP truncation point are zero.

In Embodiment 3-2, the second UW 1 may be used as an SCP in the next waveform symbol of the first waveform symbol.

Embodiment 3-3: There is transmission of the second waveform symbol within the duration corresponding to the previous symbol of the first waveform symbol, and the second waveform symbol cannot provide a UW as an SCP in the first waveform symbol. In other words, there is no signal transmission on the previous symbol of the first waveform symbol.

In addition, in Embodiment 3-3, the value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a < \left\lceil \frac{N_{CP}M}{N} \right\rceil .$

Optionally, $a = \left\lceil \frac{M}{100} \right\rceil .$

The value relationship represented by " $\left\lceil \frac{N_{SCP}M}{N} \right\rceil + 2a < \left\lceil \frac{N_{CP}M}{N} \right\rceil$ " may alternatively be described as follows: A difference between twice the length of the second UW and the length of the first SCP is less than the length of the CP in the first waveform symbol.

In this case, the first set includes the first sequence and the second sequence, and optionally, may include the third sequence. In other words, the first waveform symbol includes the first UW and the second UW, and optionally, may further include the third UW. If the first waveform symbol includes the third UW, the CP truncation point is within the range of the third UW.

If the first waveform symbol is an uplink symbol, for example, a PUSCH, the length of the first UW is $\max\left(\left\lfloor \frac{aN}{M} \right\rfloor, N'_{SCP}\right)$. Herein, $N'_{SCP}$ is the second SCP, and max( ) represents taking a maximum value.

In an example, $N'_{SCP}$ is related to at least one of the maximum delay spread $N_d$ of the first waveform symbol, a maximum delay spread $N_d^{other}$ of the second waveform symbol, the length $N_{CP}$ of the CP in the first waveform symbol, the MCS of the first waveform symbol and/or the EVM required by the first waveform symbol, and the symbol importance level of the first waveform symbol.

If the first waveform symbol is a downlink symbol, for example, a PDSCH, the length of the first UW is $N_{SCP}$.

It can be learned that, for an uplink waveform symbol, the length of the first UW may be determined based on a maximum delay spread of the previous waveform symbol. Therefore, ISI of the previous symbol to the first symbol and/or ICI caused by CP insufficiency of the first symbol may be isolated.

In addition, in Embodiment 3-3, the length of the second UW may be $\left\lfloor \frac{\left(\left\lceil \frac{N_{SCP}M}{N} \right\rceil + a\right)N}{M} \right\rfloor$, and the length of the third UW may be $\left\lfloor \frac{\left(\left\lceil \frac{N_{SCP}M}{N} \right\rceil + 2a\right)N}{M} \right\rfloor .$

The second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is

$$\left\lfloor \frac{\left(\left\lfloor \frac{N_{SCP}M}{N}\right\rfloor + a\right)N}{M}\right\rfloor - N_{SCP}$$ . The second UW 1 may be used as an SCP in the next waveform symbol.

The third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor \frac{aN}{M}\right\rfloor$,

and a length of the third UW 3 is $\left\lfloor \frac{\left(\left\lfloor \frac{N_{SCP}M}{N}\right\rfloor + 2a\right)N}{M}\right\rfloor - N_{SCP} - \left\lfloor \frac{aN}{M}\right\rfloor$.

Optionally, the third UW 1 is a zero signal. Therefore, circular convolution may be constructed to mitigate ICI caused by CP insufficiency. To be specific, values of the CP truncation point in the first waveform symbol and $N_{SCP}$ - 1 sampling points before the CP truncation point are zero.

Embodiment 3-4: There is transmission of the second waveform symbol within the duration corresponding to the previous symbol of the first waveform symbol, and the second waveform symbol cannot provide a UW as an SCP in the first waveform symbol. In other words, there is no signal transmission on the previous symbol of the first waveform symbol.

In addition, in Embodiment 3-4, the value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N}\right\rceil + 2a \geq \left\lceil \frac{N_{CP}M}{N}\right\rceil$; or $N_{SCP}$ is greater than or equal to $N_{CP}$.

Optionally, $a = \left\lceil \frac{M}{100}\right\rceil$.

The value relationship represented by " $\left\lceil \frac{N_{SCP}M}{N}\right\rceil + 2a \geq \left\lceil \frac{N_{CP}M}{N}\right\rceil$ " may alternatively be described as follows: A difference between twice the length of the second UW and the length of the first SCP is not less than the length of the CP in the first waveform symbol.

When the condition in Embodiment 3-4 is met, the first set includes the first sequence and the second sequence, or the first waveform symbol includes the first UW and the second UW. In this case, the CP truncation point is located within a range of the second UW.

If the first waveform symbol is an uplink symbol, for example, a PUSCH, the length of the first UW is $\max\left(\left\lfloor \frac{aN}{M}\right\rfloor, N'_{SCP}\right)$. Herein, $N'_{SCP}$ is the second SCP.

In an example, $N'_{SCP}$ is related to at least one of the maximum delay spread $N_d$ of the first waveform symbol, a maximum delay spread $N_d^{other}$ of the second waveform symbol, the length $N_{CP}$ of the CP in the first waveform symbol, the MCS of the first waveform symbol and/or the EVM required by the first waveform symbol, and the symbol importance level of the first waveform symbol.

If the first waveform symbol is a downlink symbol, for example, a PDSCH, the length of the first UW is $N_{SCP}$.

It can be learned that, for an uplink waveform symbol, the length of the first UW may be determined based on a maximum delay spread of the previous waveform symbol. Therefore, ISI of the previous symbol to the first symbol and/or ICI caused by CP insufficiency of the first symbol may be isolated.

In addition, the length of the second UW in Embodiment 3-4 may be $N_{CP} + \left\lfloor \frac{\left(\left\lfloor \frac{N_{SCP}M}{N}\right\rfloor + a\right)N}{M}\right\rfloor$.

Optionally, in Embodiment 3-4, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is $N_{CP} + \left\lfloor \frac{\left(\left\lfloor \frac{N_{SCP}M}{N}\right\rfloor + a\right)N}{M}\right\rfloor - N_{SCP}$.

Optionally, a signal at the CP truncation point and a signal on a left side of the CP truncation point in the second UW are zero signals with a length of $N_{SCP}$. An advantage is that circular convolution may be constructed to mitigate ICI. To be specific, values of the CP truncation point in the first waveform symbol and $N_{SCP}$ - 1 sampling points before the CP truncation point are zero.

In Embodiment 3-4, the second UW 1 may be used as an SCP in the next waveform symbol of the first waveform symbol.

It may be understood that, in Embodiment 3-3 and Embodiment 3-4, the first UW may be a zero signal. For example, when the first waveform symbol is a downlink symbol, the first UW may be a zero signal. Correspondingly, the receive end may first set a signal at a position of the first UW to zero before performing FFT, and then perform FFT, channel equalization, and symbol demodulation. In this way, demodulation performance can be improved, and ISI can be mitigated.

It may be further understood that, in Embodiment 3, if the second waveform symbol can provide a UW as the SCP in the first waveform symbol, the UW in the first waveform symbol may be involved with reference to the manners in Embodiment 1 and Embodiment 2.

Embodiment 4: The first waveform symbol is the last waveform symbol in the plurality of waveform symbols corresponding to the K data symbols, and the first waveform symbol is a DFT-s-OFDM symbol. In Embodiment 4, according to whether the first waveform symbol needs to provide a UW or an SCP for the next waveform symbol and an association relationship between the length $N_{SCP}$ of the first SCP and the length $N_{CP}$ of the CP in the first waveform symbol, Embodiment 4 may include Embodiment 4-1, Embodiment 4-2, Embodiment 4-3, Embodiment 4-4, and Embodiment 4-5.

Embodiment 4-1: The first waveform symbol needs to provide the UW for the next waveform symbol (referred to as a third waveform symbol), and the first waveform symbol is an uplink symbol. In addition, in Embodiment 4-1, the value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a < \left\lceil \frac{N_{CP}M}{N} \right\rceil$.

Optionally, $a = \left\lceil \frac{M}{100} \right\rceil$.

The value relationship represented by " $\left\lceil \frac{N_{SCP}M}{N} \right\rceil + 2a < \left\lceil \frac{N_{CP}M}{N} \right\rceil$ " may alternatively be described as follows: A difference between twice the length of the second UW and the length of the first SCP is less than the length of the CP in the first waveform symbol.

When the condition in Embodiment 4-1 is met, the first set includes the first sequence, the second sequence, and the third sequence, or the first waveform symbol includes the first UW, the second UW, and the third UW. In this case, the CP truncation point is located within a range of the third UW.

The length of the first UW in the first waveform symbol is $\left\lfloor \frac{aN}{M} \right\rfloor$. The length of the second UW is $\left\lfloor \frac{\left( \left\lceil \frac{N_{SCP}M}{N} \right\rceil + a \right)N}{M} \right\rfloor$.

The length of the third UW is $\left\lfloor \frac{\left( \left\lceil \frac{N_{SCP}M}{N} \right\rceil + 2a \right)N}{M} \right\rfloor$. When $a = 0$, the first UW does not exist, that is, the length is zero.

Optionally, in Embodiment 4-1, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is $\left\lfloor \frac{\left( \left\lceil \frac{N_{SCP}M}{N} \right\rceil + a \right)N}{M} \right\rfloor - N_{SCP}$.

The second UW 1 is a zero signal. That is, in this case, values of last $N_{SCP}$ sampling points at the end of the first waveform symbol are zero, to mitigate ICI caused by CP insufficiency.

In addition, in Embodiment 4-1, the third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor \frac{aN}{M} \right\rfloor$, and a length of the third UW 3 is $\left\lfloor \frac{\left( \left\lceil \frac{N_{SCP}M}{N} \right\rceil + 2a \right)N}{M} \right\rfloor - N_{SCP} - \left\lfloor \frac{aN}{M} \right\rfloor$.

Embodiment 4-2: The first waveform symbol needs to provide a UW for a third waveform symbol, and the first waveform symbol is an uplink symbol. The value relationship between the length $N_{SCP}$ of the first SCP and the length $N_{CP}$ of the CP in the first waveform symbol meets the following:

$N_{SCP}$ is less than $N_{CP}$, and $\left\lceil \frac{N_{SCP}M}{N} \right\rceil + 2a \geq \left\lceil \frac{N_{CP}M}{N} \right\rceil$; or $N_{SCP}$ is greater than or equal to $N_{CP}$.

Optionally, $a = \left\lceil \frac{M}{100} \right\rceil$.

The value relationship represented by " $\left\lceil \frac{N_{SCP}M}{N} \right\rceil + 2a \geq \left\lceil \frac{N_{CP}M}{N} \right\rceil$ " may alternatively be described as follows: A difference between twice the length of the second UW and the length of the first SCP is not less than the length of the CP in the first waveform symbol.

When the condition in Embodiment 4-2 is met, the first set includes the first sequence and the second sequence, or the first waveform symbol includes the first UW and the second UW. In this case, the CP truncation point is located within a range of the second UW.

The length of the first UW in the first waveform symbol is $\left\lfloor \frac{aN}{M} \right\rfloor$ . The length of the second UW is $N_{CP}$ +

$\left\lfloor \frac{\left( \left\lceil \frac{N_{SCP}M}{N} \right\rceil + a \right)N}{M} \right\rfloor$ .

Optionally, in Embodiment 4-2, the second UW may be split into two sub-UWs: a second UW 1 and a second UW 2 whose end positions are at the end of the symbol, as shown in FIG. 10A. A length of the second UW 1 is $N_{SCP}$, and a length of the second UW 2 is

$$N_{CP} + \left\lfloor \frac{\left( \left\lceil \frac{N_{SCP}M}{N} \right\rceil + a \right)N}{M} \right\rfloor - N_{SCP} .$$

The second UW 1 is a zero signal. That is, values of last $N_{SCP}$ sampling points at the end of the first waveform symbol may be zero.

It may be understood that, in Embodiment 4-1 and Embodiment 4-2, because the first waveform symbol is an uplink symbol, to prevent the first waveform symbol from causing interference to the next waveform symbol, the first waveform symbol does not include an SCP in the next waveform symbol.

Embodiment 4-3: The first waveform symbol needs to provide the SCP for the next waveform symbol (namely, a third waveform symbol), and the first waveform symbol is a downlink symbol.

When the first waveform symbol needs to provide the SCP for the third waveform symbol, a value relationship between a length of the SCP in the third waveform symbol and the length $N_{CP}$ of the CP in the first waveform symbol needs to be considered to determine the sequence included in the first set of the first waveform symbol. The SCP in the third waveform symbol is referred to as a third SCP in the following.

In Embodiment 4-3, the value relationship between the length $N_{SCP}^{other}$ of the third SCP and the length $N_{CP}$ of the CP in the first waveform symbol meets the following:

$N_{SCP}^{other}$ is less than $N_{CP}$, and $\left\lceil \frac{N_{SCP}^{other}M}{N} \right\rceil + 2a < \left\lceil \frac{N_{CP}M}{N} \right\rceil$ . $N_{SCP}^{other}$ is related to at least one of a maximum delay spread

$N_d^{other}$ of the third waveform symbol, a length of a CP in the third waveform symbol, an importance level of the third waveform symbol, an MCS of the third waveform symbol, and an EVM required by the third waveform symbol. For a manner of determining $N_{SCP}^{other}$ , refer to the descriptions of the manner of determining $N_{SCP}$.

Optionally, $a = \left\lceil \frac{M}{100} \right\rceil$ .

The value relationship represented by " $\left\lceil \frac{N_{SCP}^{other}M}{N} \right\rceil + 2a < \left\lceil \frac{N_{CP}M}{N} \right\rceil$ " may alternatively be described as follows: A difference between twice the length of the second UW and the length of the third SCP is less than the length of the CP in the first waveform symbol.

When the condition in Embodiment 4-3 is met, the first set includes the first sequence, the second sequence, and the third sequence, or the first waveform symbol includes the first UW, the second UW, and the third UW. In this case, the CP truncation point is located within a range of the third UW.

The length of the first UW in the first waveform symbol is $\left\lfloor \frac{aN}{M} \right\rfloor$ . The length of the second UW is $\left\lfloor \frac{\left( \left\lceil \frac{N_{SCP}^{other}M}{N} \right\rceil + a \right)N}{M} \right\rfloor$ .

The length of the third UW is $\left\lfloor \frac{\left( \left\lceil \frac{N_{SCP}M}{N} \right\rceil + 2a \right)N}{M} \right\rfloor$ . When $a = 0$, the first UW does not exist, that is, the length is zero.

Optionally, in Embodiment 4-3, the second UW may be split into two sub-UWs: a second UW 1 and a second UW 2 whose end positions are at the end of the symbol, as shown in FIG. 10A. A length of the second UW 1 is $N_{SCP}^{other}$ , and a length of the second UW 2 is $\left\lfloor \frac{\left( \left\lceil \frac{N_{SCP}^{other}M}{N} \right\rceil + a \right)N}{M} \right\rfloor - N_{SCP}^{other}$ .

The second UW 1 may be used as an SCP in the third waveform symbol.

In addition, in Embodiment 4-3, the third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor\frac{aN}{M}\right\rfloor$, and a length of the third UW 3 is $\left\lfloor\frac{\left(\left\lceil\frac{N_{SCP}M}{N}\right\rceil+2a\right)N}{M}\right\rfloor - N_{SCP} - \left\lfloor\frac{aN}{M}\right\rfloor$.

Embodiment 4-4: The first waveform symbol needs to provide the SCP for the next waveform symbol (namely, a third waveform symbol), and the first waveform symbol is a downlink symbol.

When the first waveform symbol needs to provide the SCP for the third waveform symbol, a value relationship between a length of the SCP in the third waveform symbol and the length $N_{CP}$ of the CP in the first waveform symbol needs to be considered to determine the sequence included in the first set of the first waveform symbol. The SCP in the third waveform symbol is referred to as a third SCP in the following.

In Embodiment 4-4, the value relationship between the length $N_{SCP}^{other}$ of the third SCP and the length $N_{CP}$ of the CP in the first waveform symbol meets the following:

$N_{SCP}^{other}$ is less than $N_{CP}$, and $\left\lceil\frac{N_{SCP}^{other}M}{N}\right\rceil + 2a \geq \left\lceil\frac{N_{CP}M}{N}\right\rceil$; or $N_{SCP}^{other}$ is greater than or equal to $N_{CP}$.

Optionally, $a = \left\lceil\frac{M}{100}\right\rceil$.

The value relationship represented by "$\left\lceil\frac{N_{SCP}^{other}M}{N}\right\rceil + 2a \geq \left\lceil\frac{N_{CP}M}{N}\right\rceil$" may alternatively be described as follows: A difference between twice the length of the second UW and the length of the third SCP is not less than the length of the CP in the first waveform symbol.

When the condition in Embodiment 4-4 is met, the first set includes the first sequence and the second sequence, or the first waveform symbol includes the first UW and the second UW. In this case, the CP truncation point is located within a range of the second UW.

The length of the first UW in the first waveform symbol is $\left\lfloor\frac{aN}{M}\right\rfloor$. The length of the second UW is $N_{CP} +$

$$max\left(\left\lfloor\frac{\left(\left\lceil\frac{N_{SCP}M}{N}\right\rceil+a\right)N}{M}\right\rfloor, \left\lfloor\frac{\left(\left\lceil\frac{N_{SCP}^{other}M}{N}\right\rceil+a\right)N}{M}\right\rfloor\right).$$

Optionally, in Embodiment 4-4, the second UW may be split into two sub-UWs: a second UW 1 and a second UW 2 whose end positions are at the end of the symbol, as shown in FIG. 10A. A length of the second UW 1 is $N_{SCP}^{other}$, and a length of the second UW 2 is

$$N_{CP} + max\left(\left\lfloor\frac{\left(\left\lceil\frac{N_{SCP}M}{N}\right\rceil+a\right)N}{M}\right\rfloor, \left\lfloor\frac{\left(\left\lceil\frac{N_{SCP}^{other}M}{N}\right\rceil+a\right)N}{M}\right\rfloor\right) - N_{SCP}^{other}.$$

The second UW 1 may be used as an SCP in the third waveform symbol.

Embodiment 4-5: If the first waveform symbol does not need to provide the UW for the next waveform symbol (namely, a third waveform symbol), the first set includes the third sequence, in other words, the first set may not include the first sequence and the second sequence.

In Embodiment 4-5, a length of a third UW may be $\left\lfloor\frac{\left(\left\lceil\frac{N_{SCP}M}{N}\right\rceil+2a\right)N}{M}\right\rfloor$.

Optionally, the third UW may be split into three sub-UWs: a third UW 1, a third UW 2, and a third UW 3 whose end positions are the CP truncation point, as shown in FIG. 10B. The third UW 2 is located on a left side of the third UW 1, and the third UW 3 is located on a right side of the CP truncation point. A length of the third UW 1 is $N_{SCP}$, a length of the third UW 2 is $\left\lfloor\frac{aN}{M}\right\rfloor$, and a length of the third UW 3 is $\left\lfloor\frac{\left(\left\lceil\frac{N_{SCP}M}{N}\right\rceil+2a\right)N}{M}\right\rfloor - N_{SCP} - \left\lfloor\frac{aN}{M}\right\rfloor$.

It may be understood that, in Embodiment 1 to Embodiment 4, a value of *a* may be determined based on at least one of the importance level of the first waveform symbol, the MCS corresponding to the first waveform symbol, and the EVM corresponding to the first waveform symbol. In the foregoing embodiments, only $a = \left\lceil\frac{M}{100}\right\rceil$ is used as an example for description. This should not be understood as a limitation on the value.

In addition, refer to the descriptions in this application. In Embodiment 1 to Embodiment 4, a value of the first SCP is related to at least one of the maximum delay spread length $N_d$ corresponding to the first waveform symbol, the length of the CP in the first waveform symbol, the importance level of the first waveform symbol, the MCS corresponding to the first waveform symbol, and the EVM corresponding to the first waveform symbol. In addition to the first SCP, the second SCP is further related to the maximum delay spread length corresponding to the second waveform symbol. Therefore, it may also be understood that the second SCP is related to the first SCP, or the second SCP is determined based on the first SCP. In addition, for a manner of determining the third SCP, refer to that of the first SCP. A difference lies in that the first SCP corresponds to the first waveform symbol, and the third SCP corresponds to the third waveform symbol.

The foregoing describes, with reference to Embodiment 1 to Embodiment 4, a manner in which the transmit end adds the sequence to the data symbol and obtains the first set. It may be understood that, in a corresponding embodiment, the receive end may obtain, by demodulating a received waveform symbol, the first set including a corresponding sequence. Therefore, in S104, the receive end may learn, based on the configuration information, one or more, included in the first set, of the first sequence, the second sequence, and the third sequence and sequence lengths, so that the receive end may use information other than the one or more sequences in the first set as a data symbol, to complete receiving of the data symbol.

It may be understood that, to implement the functions in the foregoing embodiments, the network device and the terminal include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions. Network device

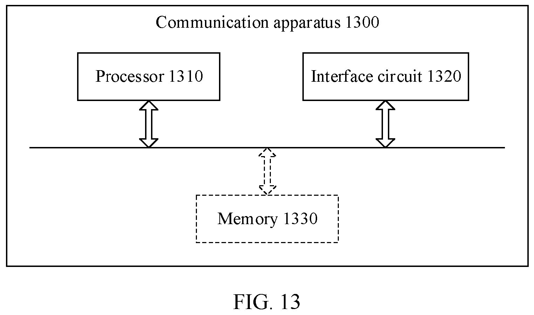

FIG. 12 and FIG. 13 are diagrams of structures of possible communication apparatuses according to embodiments of this application. These communication apparatuses may be configured to implement functions of a transmit end or a receive end in the foregoing method embodiments. Therefore, beneficial effects of the foregoing method embodiments can also be implemented. The transmit end and the receive end each may be used as one of the terminal and the network device. In embodiments of this application, the communication apparatus may be the terminal device shown in FIG. 1, or may be the network device shown in FIG. 1, or may be a module (for example, a chip) used in the terminal or the base station.

As shown in FIG. 12, a communication apparatus 1200 includes a processing unit 1210 and a transceiver unit 1220. The communication apparatus 1200 is configured to implement a function of the transmit end or the receive end in the method embodiment shown in FIG. 8.

When the communication apparatus 1200 is configured to implement the function of the transmit end in the method embodiment shown in FIG. 8, the processing unit 1210 or the transceiver unit 1220 may be configured to: obtain K to-be-sent data symbols, add at least one of a first sequence, a second sequence, and a third sequence to P data symbols based on first configuration information to obtain a first set, and modulate the first set to obtain a first waveform symbol. The transceiver unit 1220 may be configured to obtain the K to-be-sent data symbols.

When the communication apparatus 1200 is configured to implement the function of the receive end in the method embodiment shown in FIG. 8, the transceiver unit 1220 may be configured to receive the first waveform symbol at the receive end. The processing unit 1210 or the transceiver unit 1220 may be configured to: demodulate the first waveform symbol to obtain the first set, and obtain a data symbol from the first set based on the first configuration information.

For more detailed descriptions of the processing unit 1210 and the transceiver unit 1220, refer to related descriptions in the method embodiment shown in FIG. 8.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the method shown in FIG. 8, the processor 1310 is configured to implement a function of the processing unit 1210, and the interface circuit 1320 is configured to implement a function of the transceiver unit 1220.

When the foregoing communication apparatus is a chip used in a UE, the chip in the UE implements the function of the transmit end or the receive end in the method embodiments. The chip in the UE receives a signal or information by using another module (for example, a radio frequency module or an antenna) in the UE, where the signal or the information is sent by a base station to the UE. Alternatively, the chip in the UE sends information to another module (for example, a radio frequency module or an antenna) in the UE, where the information is sent by the UE to a base station.

When the foregoing communication apparatus is a module used in a base station, the module in the base station implements the function of the transmit end or the receive end in the method embodiments. The base station module receives information from another module (for example, a radio frequency module or an antenna) in the base station, where the information is sent by a terminal device to the base station. Alternatively, the base station module sends information to another module (for example, a radio frequency module or an antenna) in the base station, where the information is sent by the base station to a terminal device. The module in the base station herein may be a baseband chip in the base station, or may be a CU, a DU, or another module, or may be an apparatus in an open radio access network (open radio access network, O-RAN) architecture, for example, an apparatus like an open CU or open DU.

It may be understood that, the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in the base station or the O-RAN. The processor and the storage medium may exist in the base station or the O-RAN as discrete components.

An embodiment of this application further provides a computer-readable storage medium. The computer-readable storage medium stores instructions, and the instructions may also be referred to as a computer program, computer program code, or the like. The instruction runs on a computer, so that the computer performs the methods in FIG. 8 in the foregoing method embodiment and embodiments of this application.

An embodiment of this application further provides a computer program product, including a computer program or instructions. When the computer program or the instructions are run on a computer, the methods in FIG. 8 and embodiments of this application are implemented.

An embodiment of this application further provides a chip. The chip includes a processor, the processor is coupled to a memory, and the processor is configured to execute a computer program or instructions stored in the memory, so that the methods in FIG. 8 and embodiments of this application are implemented. For example, an example in which the chip implements a function of the access network device is used. The chip may receive information from another module (for example, a radio frequency or an antenna) in the access network device, and the information may be sent by a terminal to the access network device. Alternatively, the chip may send information to another module (for example, a radio frequency or an antenna) in the access network device. The information is sent by the access network device to a terminal.

An embodiment of this application further provides a communication system, including a first communication apparatus and a second communication apparatus. The first communication apparatus and the second communication apparatus may be separately configured to implement functions of the transmit end and the receive end in this application.

All or some of the foregoing embodiments may be implemented by using software, hardware, firmware, or any combination thereof. When software is used to implement embodiments, all or some of embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/Or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that numerical symbols involved in embodiments of this application are differentiated merely for ease of description, but are not used to limit the scope of embodiments of this application. The sequence numbers of the foregoing processes do not mean execution sequences, and the execution sequences of the processes should be determined based on functions and internal logic of the processes.

**Claims**

1.   A communication method, comprising:

    obtaining K data symbols;
    based on first configuration information, adding a first sequence, a second sequence, and a third sequence to P data symbols to obtain a first set, or adding a first sequence and a second sequence to P data symbols to obtain a first set, or adding a second sequence and a third sequence to P data symbols to obtain a first set, wherein the K data symbols comprise the P data symbols, K is a positive integer greater than 1, and P is a positive integer less than or equal to K;
    modulating the first set to obtain a first waveform symbol; and
    sending the first waveform symbol, wherein
    a signal generated after the first sequence is modulated is consecutive with a CP in the first waveform symbol, the signal generated after the first sequence is modulated is located after the CP in the first waveform symbol, an end position of a signal generated after the second sequence is modulated is an end position in the first waveform symbol, and a position of a signal generated after the third sequence is modulated is determined based on a length of the CP in the first waveform symbol.

2.   The method according to claim 1, wherein the first configuration information is determined based on a length of a first supplementary cyclic prefix SCP comprised in the first waveform symbol and the length of the cyclic prefix CP in the first waveform symbol.

3.   The method according to claim 1 or 2, wherein the position of the signal generated after the third sequence is modulated is specifically determined based on the length of the CP in the first waveform symbol, a length of the signal generated after the second sequence is modulated, and the length of the first SCP.

4.   The method according to any one of claims 1 to 3, wherein when the first waveform symbol is not a last waveform symbol in a plurality of waveform symbols corresponding to the K data symbols, an end part or all of the signal generated after the second sequence is modulated is used as an SCP in a next waveform symbol of the first waveform symbol.

5.   The method according to claim 4, wherein a length of the SCP in the next waveform symbol of the first waveform symbol is equal to the length of the first SCP.

6.   The method according to any one of claims 1 to 5, wherein the first configuration information is further determined based on at least one of M, N, and a, M is a discrete Fourier transform DFT point quantity, N is an inverse discrete Fourier transform IDFT point quantity, and $a$ is related to at least one of a bandwidth, an importance level of the first waveform symbol, a modulation and coding scheme MCS corresponding to the first waveform symbol, and an error vector magnitude EVM corresponding to the first waveform symbol.

7.   The method according to claim 6, wherein the first configuration information is specifically determined based on a value relationship between $\left\lceil \frac{N_{SCP}M}{N} \right\rceil + ta$ and $\left\lceil \frac{N_{CP}M}{N} \right\rceil$, wherein t is a positive integer.

8.   The method according to any one of claims 1 to 7, wherein the first waveform symbol is a discrete Fourier transform-spread-orthogonal frequency division multiplexing DFT-s-OFDM symbol, and based on the first configuration information, adding the first sequence, the second sequence, and the third sequence to at least one data symbol to obtain the first set, or adding the first sequence and the second sequence to the first set, or adding the second sequence and the third sequence to the first set comprises:

when a difference between twice the length of the signal generated after the second sequence is modulated and the length of the first SCP is less than the length of the CP in the first waveform symbol, adding the first sequence, the second sequence, and the third sequence to the first set; or

when a difference between twice the length of the signal generated after the second sequence is modulated and the length of the first SCP is not less than the length of the CP in the first waveform symbol, adding the first sequence and the second sequence to the first set.

9. The method according to any one of claims 1 to 8, wherein the first waveform symbol is not a 1st waveform symbol and the last waveform symbol in the plurality of waveform symbols corresponding to the K data symbols, and a length of the first sequence is determined based on at least one of the following:

the bandwidth; or
the importance level of the first waveform symbol; or
the MCS corresponding to the first waveform symbol; or
the EVM corresponding to the first waveform symbol.

10. The method according to any one of claims 1 to 9, wherein the first waveform symbol is not the 1st waveform symbol and the last waveform symbol in the plurality of waveform symbols corresponding to the K data symbols, and a length of the second sequence is determined based on at least one of the following:

the length of the first SCP; or
the length of the first sequence; or
the length of the CP in the first waveform symbol.

11. The method according to any one of claims 1 to 10, wherein the first waveform symbol is not the 1st waveform symbol and the last waveform symbol in the plurality of waveform symbols corresponding to the K data symbols, and a length of the third sequence is determined based on at least one of the following:

the length of the first SCP; or
the length of the first sequence.

12. The method according to any one of claims 1 to 8, wherein the first waveform symbol is a 1st waveform symbol in the plurality of waveform symbols corresponding to the K data symbols, a second waveform symbol is a waveform symbol before the first waveform symbol, and the second waveform symbol does not comprise a supplementary cyclic prefix in the first waveform symbol.

13. The method according to claim 12, wherein
a value of a CP truncation point in the first waveform symbol and values of $N_{SCP}$ - 1 sampling points before the CP truncation point are zero, and $N_{SCP}$ is a quantity of sampling points comprised in the first SCP.

14. The method according to claim 12 or 13, wherein

when the first waveform symbol is an uplink waveform symbol, a length of the first sequence is determined based on a length of a second SCP, and the second SCP is determined based on a maximum delay spread length corresponding to the second waveform symbol; or
when the first waveform symbol is a downlink waveform symbol, a length of the first sequence is determined based on the length of the first SCP.

15. The method according to any one of claims 1 to 3 or claims 6 to 8, wherein the first waveform symbol is the last waveform symbol in the plurality of waveform symbols corresponding to the K data symbols, the first waveform symbol is an uplink waveform symbol, and a third waveform symbol is the next waveform symbol of the first waveform symbol; and

when the first waveform symbol does not comprise an SCP in the third waveform symbol, values of last $N_{SCP}$ sampling points in the first waveform symbol are zero, wherein $N_{SCP}$ is a quantity of sampling points comprised in the first SCP;
and/or
the first sequence is a zero sequence.

16. The method according to any one of claims 1 to 15, wherein the length of the first SCP is determined based on at least one of the following:

a maximum delay spread length corresponding to the first waveform symbol; or
the length of the CP in the first waveform symbol; or
the importance level of the first waveform symbol; or
the MCS corresponding to the first waveform symbol; or
the EVM corresponding to the first waveform symbol.

17. The method according to claim 14, wherein the length of the second SCP is further determined based on at least one of the following:

a maximum delay spread length corresponding to the first waveform symbol; or
the length of the CP in the first waveform symbol; or
the importance level of the first waveform symbol; or
the MCS corresponding to the first waveform symbol; or
the EVM corresponding to the first waveform symbol.

18. The method according to any one of claims 1 to 17, wherein the first configuration information comprises one or more of the following information:

a start position of the first sequence;
the length of the first sequence;
a start position of the second sequence;
the length of the second sequence;
a start position of the third sequence; and
the length of the third sequence.

19. A communication method, comprising:

receiving a first waveform symbol;
demodulating the first waveform symbol to obtain a first set, wherein the first set comprises P data symbols, a first sequence, a second sequence, and a third sequence, or the first set comprises P data symbols, a first sequence, and a second sequence, or the first set comprises P data symbols, a second sequence, and a third sequence; and
determining the data symbol from the first set based on first configuration information, wherein
a signal generated after the first sequence is modulated is consecutive with a CP in the first waveform symbol, the signal generated after the first sequence is modulated is located after the CP in the first waveform symbol, an end position of a signal generated after the second sequence is modulated is an end position in the first waveform symbol, and a position of a signal generated after the third sequence is modulated is determined based on a length of the CP in the first waveform symbol.

20. The method according to claim 19, wherein the first configuration information is determined based on a length of a first supplementary cyclic prefix SCP comprised in the first waveform symbol and the length of the cyclic prefix CP in the first waveform symbol.

21. The method according to claim 19 or 20, wherein the position of the signal generated after the third sequence is modulated is specifically determined based on the length of the CP in the first waveform symbol, a length of the signal generated after the second sequence is modulated, and the length of the first SCP.

22. The method according to any one of claims 19 to 21, wherein the P data symbols are comprised in K data symbols of a transmit end device, K is a positive integer greater than 1, and P is a positive integer less than or equal to K; and when the first waveform symbol is not a last waveform symbol in a plurality of waveform symbols corresponding to the K data symbols, an end part or all of the signal generated after the second sequence is modulated is used as an SCP in a next waveform symbol of the first waveform symbol.

23. The method according to any one of claims 19 to 22, wherein a length of the SCP in the next waveform symbol of the first waveform symbol is equal to the length of the first SCP.

24. The method according to any one of claims 19 to 23, wherein the first configuration information is further determined based on at least one of M, N, and a, M is a discrete Fourier transform DFT point quantity, N is an inverse discrete Fourier transform IDFT point quantity, and *a* is related to at least one of a bandwidth, an importance level of the first waveform symbol, a modulation and coding scheme MCS corresponding to the first waveform symbol, and an error vector magnitude EVM corresponding to the first waveform symbol.

25. The method according to claim 24, wherein the first configuration information is specifically determined based on a value relationship between $\left\lceil \frac{N_{SCP}M}{N} \right\rceil + ta$ and $\left\lceil \frac{N_{CP}M}{N} \right\rceil$, wherein t is a positive integer.

26. The method according to any one of claims 19 to 25, wherein the first waveform symbol is a discrete Fourier transform-spread-orthogonal frequency division multiplexing DFT-s-OFDM symbol; and

   when a difference between twice a length of the signal generated after the second sequence is modulated and the length of the first SCP is less than the length of the CP in the first waveform symbol, the first set comprises the P data symbols, the first sequence, the second sequence, and the third sequence; or
   when a difference between twice a length of the signal generated after the second sequence is modulated and the length of the first SCP is not less than the length of the CP in the first waveform symbol, the first set comprises the P data symbols, the first sequence, and the second sequence.

27. The method according to any one of claims 19 to 26, wherein the P data symbols are comprised in the K data symbols of the transmit end device, K is a positive integer greater than 1, and P is a positive integer less than or equal to K; and the first waveform symbol is not a 1st waveform symbol and the last waveform symbol in the plurality of waveform symbols corresponding to the K data symbols, and a length of the first sequence is determined based on at least one of the following:

   the bandwidth; or
   the importance level of the first waveform symbol; or
   the MCS corresponding to the first waveform symbol; or
   the EVM corresponding to the first waveform symbol.

28. The method according to any one of claims 19 to 27, wherein the P data symbols are comprised in the K data symbols of the transmit end device, K is a positive integer greater than 1, and P is a positive integer less than or equal to K; and the first waveform symbol is not the 1st waveform symbol and the last waveform symbol in the plurality of waveform symbols corresponding to the K data symbols, and a length of the second sequence is determined based on at least one of the following:

   the length of the first SCP; or
   the length of the first sequence; or
   the length of the CP in the first waveform symbol.

29. The method according to any one of claims 19 to 27, wherein the P data symbols are comprised in the K data symbols of the transmit end device, K is a positive integer greater than 1, and P is a positive integer less than or equal to K; and the first waveform symbol is not the 1st waveform symbol and the last waveform symbol in the plurality of waveform symbols corresponding to the K data symbols, and a length of the third sequence is determined based on at least one of the following:

   the length of the first SCP; or
   the length of the first sequence.

30. The method according to any one of claims 19 to 26, wherein the P data symbols are comprised in the K data symbols of the transmit end device, K is a positive integer greater than 1, and P is a positive integer less than or equal to K; and the first waveform symbol is a 1st waveform symbol in the plurality of waveform symbols corresponding to the K data symbols, a second waveform symbol is a waveform symbol before the first waveform symbol, and the second waveform symbol does not comprise a supplementary cyclic prefix in the first waveform symbol.

31. The method according to claim 30, wherein
a value of a CP truncation point in the first waveform symbol and values of $N_{SCP}$ - 1 sampling points before the CP truncation point are zero, and $N_{SCP}$ is a quantity of sampling points comprised in the first SCP.

32. The method according to claim 30 or 31, wherein

when the first waveform symbol is an uplink waveform symbol, a length of the first sequence is determined based on a length of a second SCP, and the second SCP is determined based on a maximum delay spread length corresponding to the second waveform symbol; or
when the first waveform symbol is a downlink waveform symbol, a length of the first sequence is determined based on the length of the first SCP.

33. The method according to any one of claims 19 to 21 or claims 24 to 26, wherein the P data symbols are comprised in the K data symbols of the transmit end device, K is a positive integer greater than 1, and P is a positive integer less than or equal to K; and

the first waveform symbol is the last waveform symbol in the plurality of waveform symbols corresponding to the K data symbols, the first waveform symbol is an uplink waveform symbol, and a third waveform symbol is the next waveform symbol of the first waveform symbol; and
when the first waveform symbol does not comprise an SCP in the third waveform symbol, values of last $N_{SCP}$ sampling points in the first waveform symbol are zero, wherein $N_{SCP}$ is a quantity of sampling points comprised in the first SCP;
and/or
the first sequence is a zero sequence.

34. The method according to any one of claims 19 to 33, wherein the length of the first SCP is determined based on at least one of the following:

a maximum delay spread length corresponding to the first waveform symbol; or
the length of the CP in the first waveform symbol; or
the importance level of the first waveform symbol; or
the MCS corresponding to the first waveform symbol; or
the EVM corresponding to the first waveform symbol.

35. The method according to claim 32, wherein the length of the second SCP is further determined based on at least one of the following:

a maximum delay spread length corresponding to the first waveform symbol; or
the length of the CP in the first waveform symbol; or
the importance level of the first waveform symbol; or
the MCS corresponding to the first waveform symbol; or
the EVM corresponding to the first waveform symbol.

36. The method according to any one of claims 19 to 35, wherein the first configuration information comprises one or more of the following information:

a start position of the first sequence;
a length of the first sequence;
a start position of the second sequence;
the length of the second sequence;
a start position of the third sequence; and
the length of the third sequence.

37. A communication apparatus, comprising a unit or module configured to perform the method according to any one of claims 1 to 18, or comprising a unit or module configured to perform the method according to any one of claims 19 to 36.

38. A communication apparatus, comprising a processor, wherein the processor is configured to execute a computer program or instructions, to implement the method according to any one of claims 1 to 18, or implement the method according to any one of claims 19 to 36.

**39.** A computer-readable storage medium, wherein the storage medium stores a computer program or instructions, and when the computer program or the instructions are executed by a communication apparatus, the method according to any one of claims 1 to 18 is implemented, or the method according to any one of claims 19 to 36 is implemented.

**40.** A computer program product, wherein when the computer program product is executed by a computer, the computer performs the method according to any one of claims 1 to 18, or performs the method according to any one of claims 19 to 36.

FIG. 1

$$T_{symb} = T_{CP} + T_u$$

FIG. 2

FIG. 3

$S_k$

Data symbol → S-to-P → $M$-point DFT → Subcarrier mapping → $N$-point IDFT → P-to-S → CP addition → DAC/ RF

$S_k$          $X_k$          $x_k$

$M$          $M$          $N$          $N$          $N+G$

Channel

Detection ← P-to-S ← $M$-point IDFT ← Subcarrier demapping ← $N$-point DFT ← S-to-P ← CP removal ← RF/ DAC

DFT-s-OFDM: ⬭ + ▭

OFDMA: ⬭

EP 4 787 791 A1

Data symbol → **S**$_k$

Partition → CP addition → Upsampling → Beamforming → DAC/ RF

$M$        $M+Q$

Channel

Detection ← P- to-S ← $M$-point IDFT ← Subcarrier demapping ← $M$- point DFT ← S-to- P ← CP removal ← Downsampling ← RF/ DAC

FIG. 4

Equivalent CP

Copy

Copy

| D2 | D1 | | D2 | D1 | | D2 | D1 |

$N_{CP}$

$N_{CP}$

$\widetilde{x}_{k-1}$

$\widetilde{x}'_{k}$

CP truncation point

FIG. 5

FIG. 6A

FIG. 6B

Random sequence 1

Second fixed sequence

DFT

Random sequence 2

Third fixed sequence

*M*

## FIG. 7

Transmit end

Receive end

S101: Obtain K to-be-sent data symbols, add at least one of a first sequence, a second sequence, and a third sequence to P data symbols based on first configuration information to obtain a first set, and modulate the first set to obtain a first waveform symbol

S102: Send the first waveform symbol

S103: Demodulate the first waveform symbol to obtain the first set, where the first set includes the P data symbols and one or more of the first sequence, the second sequence, and the third sequence

S104: Obtain a data symbol from the first set based on the first configuration information

## FIG. 8

First waveform symbol

| CP | First UW | D | Third UW | D | Second UW |
|----|----------|---|----------|---|-----------|

Receive window

FIG. 9

| Second UW 2 | Second UW 1 |
|-------------|-------------|

Second UW

FIG. 10A

| Third UW 2 | Third UW 1 | Third UW 3 |
|------------|------------|------------|

Third UW

CP truncation point

FIG. 10B

| Third UW 2 | Third UW 1 |
|------------|------------|

Third UW

CP truncation point

FIG. 10C

Empirical CDF curve

FIG. 11

FIG. 12

Communication apparatus 1300

Processor 1310

Interface circuit 1320

Memory 1330

FIG. 13

## INTERNATIONAL SEARCH REPORT

| International application No. |
| --- |
| **PCT/CN2024/124571** |

**A. CLASSIFICATION OF SUBJECT MATTER**

H04L 27/26(2006.01)i

According to International Patent Classification (IPC) or to both national classification and IPC

**B. FIELDS SEARCHED**

Minimum documentation searched (classification system followed by classification symbols)

IPC:H04L: H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 循环前缀, 补充, 附加, 独特字, 唯一字, 特殊字, 长度, 位置, 结束, 结尾, 末尾, 开始, 开头, CP, SCP, UW, length, position, location, end, start

**C. DOCUMENTS CONSIDERED TO BE RELEVANT**

| Category* | Citation of document, with indication, where appropriate, of the relevant passages | Relevant to claim No. |
| --- | --- | --- |
| X | CN 113366795 A (APPLE INC.) 07 September 2021 (2021-09-07) description, paragraphs 0002-0851, and figures 1-19 | 1, 6, 7, 9, 18, 19, 24, 25, 27, 36-40 |
| Y | CN 113366795 A (APPLE INC.) 07 September 2021 (2021-09-07) description, paragraphs 0002-0851, and figures 1-19 | 1-40 |
| Y | CN 112217753 A (CHENGDU HUAWEI TECHNOLOGIES CO., LTD.) 12 January 2021 (2021-01-12) description, paragraphs 0002-0266, and figures 1-22 | 1-40 |
| Y | CN 115550119 A (HUAWEI TECHNOLOGIES CO., LTD.) 30 December 2022 (2022-12-30) description, paragraphs 0002-0457 | 2-5, 8, 10-17, 20-23, 26, 28-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 January 2025** | **15 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/124571**

| Patent document cited in search report | | | Publication date (day/month/year) | Patent family member(s) | | | Publication date (day/month/year) |
|---|---|---|---|---|---|---|---|
| CN | 113366795 | A | 07 September 2021 | US | 2022166580 | A1 | 26 May 2022 |
| | | | | WO | 2020160554 | A1 | 06 August 2020 |
| CN | 112217753 | A | 12 January 2021 | WO | 2021008392 | A1 | 21 January 2021 |
| | | | | EP | 3989499 | A1 | 27 April 2022 |
| | | | | US | 2022131730 | A1 | 28 April 2022 |
| | | | | CN | 115776426 | A | 10 March 2023 |
| CN | 115550119 | A | 30 December 2022 | WO | 2023273857 | A1 | 05 January 2023 |
| | | | | EP | 4336786 | A1 | 13 March 2024 |

Form PCT/ISA/210 (patent family annex) (July 2022)

**EP 4 787 791 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311423753